# EUROPEAN PATENT APPLICATION

(11) **EP 4 447 596 A1**
(43) Date of publication of application: **16.10.2024**
(21) Application number: 22903998.7
(22) Date of filing: 18.11.2022
(51) Int. Cl.: H04W 72/566, H04W 72/0446, H04W 72/40, H04W 92/18

(54) **COMMUNICATION METHOD, COMMUNICATION DEVICE, AND COMMUNICATION SYSTEM**

(30) Priority: 10.12.2021 JP 2021201092
(71) Applicant: Sony Group Corporation, Tokyo 108-0075 (JP)
(72) Inventor: SUGAI, Ren, Tokyo 108-0075 (JP); SHIMEZAWA, Kazuyuki, Tokyo 108-0075 (JP); KUSASHIMA, Naoki, Tokyo 108-0075 (JP); UCHIYAMA, Hiromasa, Tokyo 108-0075 (JP)
(74) Representative: Witte, Weller & Partner Patentanwälte mbB
(86) International application number: PCT/JP2022/042818
(87) International publication number: WO 2023/106067

(57) **Abstract**

A communication method includes performing sidelink communication with a first communication device (200C). The communication method includes monitoring whether pre-emption information regarding pre-emption has been transmitted from a second communication device (200B) at a predetermined timing when transmitting data to a first communication device (200C). The communication method includes stopping transmission of data to the first communication device (200C) if pre-emption information is received.

## Description

### Field

The present disclosure relates to a communication method, a communication device, and a communication system. Background

In the 3rd generation partnership project (3GPP (registered trademark)), device-to-device (D2D) communication for performing direct communication between terminals (UEs) is standardized as sidelink communication by long term evolution (4G LTE) and new radio (5G NR), separately. In sidelink communication, vehicle-to-everything (V2X) communication is one of main use cases. As the V2X communication, vehicle-to-vehicle (V2V), vehicle-to-infrastructure (V2I), vehicle-to-pedestrian (V2P), and vehicle-to-network (V2N) are assumed.

In particular, Platooning, Advanced driving, Extended sensor, and Remote driving have been studied as specific use cases of V2X communication in 5G NR. In addition, as requirements for ultra reliable and low latency communications (URLLC) in V2X communication, a standard has been formulated so as to realize a delay of 10 milliseconds or less and reliability of 99.999%.

Here, in a use case where the eMBB traffic and the URLLC traffic overlap in the sidelink, a technology of pre-empting a resource of the eMBB traffic to satisfy the requirements for URLLC is known.

In this technology, a user equipment receives a sidelink pre-empting notification indicating that at least a part of an eMBB resource already scheduled by SL grand is used for URLLC traffic, and stops using the eMBB resource based on the notification.

### Citation List

### Patent Literature

Patent Literature 1: WO 2020/017012 A

### Summary

### Technical Problem

However, in the above-described technology, pre-emption of the eMBB resource cannot be performed in some cases depending on an occurrence timing of URLLC traffic. For example, when URLLC traffic occurs immediately before the eMBB resource, the user equipment cannot receive the sidelink pre-emption notification described above and cannot stop using the eMBB resource.

As described above, there is a case where the above-described technology cannot satisfy the low delay requirements of URLLC.

Therefore, the present disclosure provides a mechanism capable of realizing sidelink communication with lower delay.

Note that the above problem or object is merely one of a plurality of problems or objects that can be solved or achieved by the plurality of embodiments disclosed in the present specification.

### Solution to Problem

A communication method of the present disclosure includes performing sidelink communication with a first communication device. The communication method includes monitoring whether pre-emption information regarding pre-emption has been transmitted from a second communication device at a predetermined timing when transmitting data to a first communication device. The communication method includes stopping transmission of data to the first communication device if pre-emption information is received.

### Brief Description of Drawings

FIG. 1 is a diagram illustrating an example of a schematic configuration of a communication system according to an embodiment of the present disclosure.
FIG. 2 is a diagram illustrating an example of a frame configuration in sidelink communication.
FIG. 3 is a diagram illustrating an example of a frame configuration in sidelink communication.
FIG. 4 is a diagram illustrating an example of a frame configuration in sidelink communication according to an embodiment of the present disclosure.
FIG. 5 is a diagram for explaining an example of sidelink communication.
FIG. 6 is a diagram for explaining an example of a pre-emption operation executed in sidelink communication.
FIG. 7 is a diagram for explaining another example of sidelink communication.
FIG. 8 is a diagram for explaining another example of a pre-emption operation executed in sidelink communication.
FIG. 9 is a diagram for explaining an example of a pre-emption operation according to an embodiment of the present disclosure.
FIG. 10 is a diagram for explaining an example of a pre-emption operation executed in sidelink communication.
FIG. 11 is a diagram for explaining an example of sidelink communication in which pre-emption cannot be performed.
FIG. 12 is a diagram for explaining another example of sidelink communication in which pre-emption cannot be performed.
FIG. 13 is a block diagram illustrating a configuration example of a base station according to an embodiment of the present disclosure.
FIG. 14 is a block diagram illustrating a configuration example of a terminal device according to an embodiment of the present disclosure.
FIG. 15 is a diagram for explaining a first monitoring method according to an embodiment of the present disclosure.
FIG. 16 is a flowchart illustrating an example of a procedure of pre-empted processing according to an embodiment of the present disclosure.
FIG. 17 is a diagram for explaining a second monitoring method according to an embodiment of the present disclosure.
FIG. 18 is a flowchart illustrating another example of a procedure of pre-empted processing according to an embodiment of the present disclosure.
FIG. 19 is a diagram for explaining a third monitoring method according to an embodiment of the present disclosure.
FIG. 20 is a sequence diagram illustrating an example of a procedure of mode switching processing according to an embodiment of the present disclosure.
FIG. 21 is a diagram for explaining a pre-emption operation in a case where a legacy terminal exists according to an embodiment of the present disclosure.
FIG. 22 is a diagram for explaining an example of a pre-emption operation according to an embodiment of the present disclosure.
FIG. 23 is a diagram for explaining another example of a pre-emption operation according to an embodiment of the present disclosure.
FIG. 24 is a diagram for explaining a configuration example of a sub-slot according to an embodiment of the present disclosure.
FIG. 25 is a diagram illustrating another example of the configuration of the sub-slot according to an embodiment of the present disclosure.

### Description of Embodiments

Hereinafter, embodiments of the present disclosure will be described in detail with reference to the accompanying drawings. Note that, in the present specification and the drawings, components having substantially the same functional configuration are denoted by the same reference numerals, and redundant description is omitted.

Furthermore, in the present specification and the drawings, similar components of the embodiments may be distinguished by adding different alphabets or numbers after the same reference numerals. However, if it is not necessary to distinguish the similar constituent elements from one another, only the same reference numeral is given.

Note that one or a plurality of embodiments (examples and modifications) described below can be implemented independently. On the other hand, the plurality of embodiments described below may be implemented at least partially in appropriate combination with at least some of other embodiments. The plurality of embodiments may include novel features that are different from one another. Therefore, the plurality of embodiments can contribute to solving different objects or problems, and can exhibit different effects.

### <<1. Introduction>>

### <1.1. Overall Configuration Example of Communication System>

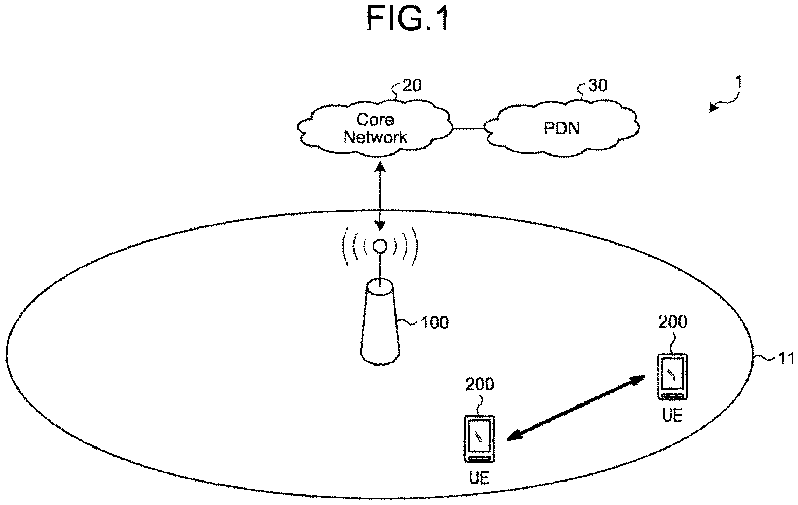

Next, an example of a schematic configuration of a communication system 1 to which the proposed technology is applied will be described with reference to FIG. 1. FIG. 1 is a diagram illustrating an example of a schematic configuration of the communication system 1 according to an embodiment of the present disclosure. As illustrated in FIG. 1, the communication system 1 includes a base station 100, a terminal device (UE) 200, a core network 20, and a packet data network (PDN) 30.

Here, the communication system 1 may be a cellular communication system such as Wideband Code Division Multiple Access (W-CDMA), Code Division Multiple Access 2000 (cdma2000), LTE, or NR. In the following description, "LTE" includes LTE-Advanced (LTE-A), LTE-Advanced Pro (LTE-A Pro), and Evolved Universal Terrestrial Radio Access (EUTRA). In addition, "NR" includes New Radio Access Technology (NRAT) and Further EUTRA (FEUTRA).

NR is a next generation (fifth generation) radio access technology (RAT) of LTE. The NR is a radio access technology that can support various use cases including enhanced mobile broadband (eMBB), massive machine type communications (mMTC), and ultra-reliable and low latency communications (URLLC).

Note that the communication system 1 is not limited to the cellular communication system. For example, the communication system 1 may be another wireless communication system such as a wireless local area network (LAN) system, a television broadcasting system, an aviation wireless system, or a space wireless communication system.

The base station 100 is a communication device that operates a cell 11 and provides a wireless service to one or more terminal devices 200 located within the coverage of the cell 11. The cell 11 can be operated according to any radio communication scheme such as LTE or NR. The base station 100 is connected to the core network 20. The core network 20 is connected to the PDN 30.

Note that the base station 100 may include a set of a plurality of physical or logical devices. For example, in the embodiment of the present disclosure, the base station 100 may be distinguished into a plurality of apparatuses of a baseband unit (BBU) and a radio unit (RU), and may be interpreted as an assembly of the plurality of apparatuses. Additionally or alternatively, in embodiments of the present disclosure, the base station 100 may be either or both of the BBU and the RU. The BBU and the RU may be connected by a predetermined interface (for example, eCPRI). Additionally or alternatively, the RU may be referred to as remote radio unit (RRU) or radio DoT (RD). Additionally or alternatively, the RU may correspond to the gNB-DU described later. Additionally or alternatively, the BBU may correspond to the gNB-CU described later. Additionally or alternatively, the RU may be an apparatus integrally formed with the antenna. An antenna included in the base station 100 (for example, an antenna integrally formed with an RU) may adopt an advanced antenna system and support MIMO (for example, FD-MIMO) or beamforming. In the advanced antenna system, an antenna included in the base station 100 (for example, an antenna integrally formed with an RU) may include, for example, 64 transmission antenna ports and 64 reception antenna ports.

Furthermore, a plurality of the base stations 100 may be connected to each other. The one or more base stations 100 may be included in a radio access network (RAN). That is, the base station 100 may be simply referred to as a RAN, a RAN node, an access network (AN), or an AN node. The RAN in LTE is referred to as an enhanced universal terrestrial RAN (EUTRAN). RAN in NR is referred to as NGR_AN. R_AN in W-CDMA (UMTS) is referred to as UTRAN. The base station 100 in LTE is referred to as an evolved node B (eNodeB) or an eNB. That is, the EUTRAN includes one or more eNodeB(s) (eNB(s)). Furthermore, the base station 100 of NR is referred to as a gNodeB or a gNB. That is, the NGR_AN includes one or more gNB(s). Further, the EUTR_AN may include a gNB (en-gNB) connected to a core network (EPC) in an LTE communication system (EPS). Similarly, the NGR_AN may include an ng-eNB connected to a core network 5GC in a 5G communications system (5GS). Additionally or alternatively, when the base station 100 is an eNB, a gNB, or the like, it may be referred to as 3GPP Access. Additionally or alternatively, when the base station 100 is a radio access point, it may be referred to as Non-3GPP Access. Additionally or alternatively, the base station 100 may be an optical remote device called a remote radio head (RRH). Additionally or alternatively, in a case where the base station 100 is a gNB, the base station 100 may be referred to as a combination of the above-described gNB central unit (CU) and gNB distributed unit (DU) or any one of them. The gNB central unit (CU) hosts a plurality of upper layers (for example, RRC, SDAP, and PDCP) of the access stratum for communication with the UE. On the other hand, the gNB-DU hosts a plurality of lower layers (for example, RLC, MAC, and PHY) of the access stratum. That is, among message and information to be described later, RRC signalling (for example, various SIB(s) including a MIB and a SIB1, an RRCSetup message, and an RRCReconfiguration message) may be generated by the gNB CU, while DCI and various physical channels (for example, PDCCH, PBCH) to be described later may be generated by the gNB-DU. Alternatively, in the RRC signalling, for example, some configurations such as IE: cellGroupConfig may be generated by the gNB-DU, and the remaining configurations may be generated by the gNB-CU. These configurations may be transmitted and received by an F1 interface to be described later. The base station 100 may be configured to be able to communicate with another base station 100. For example, when the plurality of base stations 100 are eNB(s) or a combination of an eNB and an en-gNB, the base stations 100 may be connected by an X2 interface. Additionally or alternatively, when the plurality of base stations 100 are gNB(s) or a combination of a gn-eNB and a gNB, the devices may be connected by an Xn interface. Additionally or alternatively, in a case where the plurality of base stations 100 is a combination of a gNB central unit (CU) and a gNB distributed unit (DU), the devices may be connected by the above-described F1 interface. A message and information (RRC signalling or DCI information, or Physical Channel) to be described later may be communicated between a plurality of base stations (e.g. via X2, Xn, or F1 interface).

Further, as described above, the base station 100 may be configured to manage a plurality of cells. A cell provided by the base station 100 is referred to as a serving cell. The Serving cell includes a primary cell (PCell) and a secondary cell (SCell). In a case where the dual connectivity (for example, EUTRA-EUTRA Dual Connectivity, EUTRA-NR Dual Connectivity (ENDC), EUTRA-NR Dual Connectivity with 5GC, NR-EUTRA Dual Connectivity (NEDC), and NR-NR Dual Connectivity) is provided to the UE (for example, the terminal device 200), the PCell and zero or one or more SCell(s) provided by the master node (MN) are referred to as a master cell group. Further, the Serving cell may include a PSCell (Primary Secondary Cell or Primary SCG Cell). In other words, in a case where the dual connectivity is provided to the UE, the PSCell and zero or one or more SCell(s) provided by the secondary node (SN) are referred to as a secondary cell group (SCG). Unless specially configured (for example, PUCCH on SCell), the physical uplink control channel (PUCCH) is transmitted in the PCell and the PSCell, but is not transmitted in the SCell. In addition, the radio link failure is also detected in the PCell and the PSCell, but is not detected in the SCell (does not need to be detected). As described above, since the PCell and the PSCell have a special role in the Serving Cell(s), they are also referred to as Special Cell(SpCell). One downlink component carrier and one uplink component carrier may be associated with one cell. In addition, the system bandwidth corresponding to one cell may be divided into a plurality of bandwidth parts. In this case, one or more Bandwidth Parts may be configured for the UE, and one Bandwidth Part may be used for the UE as an Active BWP. In addition, radio resources (for example, a frequency band, a numerology (subcarrier spacing), and a slot configuration) that can be used by the terminal device 200 may be different for each cell, each component carrier, or each BWP.

When the core network 20 is an NR core network (5G Core (5GC)), the core network 20 may include an access and mobility management function (AMF), a session management function (SMF), a user plane function (UPF), a policy control function (PCF), and a unified data management (UDM).

When the core network 20 is an LTE core network (Evolved Packet Core (EPC)), the core network 20 may include a mobility management entity (MME), a serving gateway (S-GW), a PDN gateway (P-GW), a policy and charging rule function (PCRF), and a home subscriber server (HSS). The AMF and the MME are control nodes that handle control plane signals, and manage a mobility state of the terminal device 200. The UPF and the S-GW/P-GW are nodes that handle user plane signals. The PCF/PCRF is a control node that performs control related to a policy and charging such as quality of service (QoS) for a PDU session or a bearer. The UDM/HSS is a control node that handles subscriber data and performs service control.

The terminal device 200 is a radio communication device that wirelessly communicates with other devices. The terminal device 200 is, for example, a sensor or a camera device having a communication function, a mobile phone, a smart device (smartphone or tablet), a personal digital assistant (PDA), or a personal computer. The terminal device 200 may be a head mounted display, VR goggles, or the like having a function of wirelessly transmitting and receiving data.

For example, the terminal device 200 wirelessly communicates with another terminal device 200 on the basis of control by the base station 100 or autonomously. In this case, the terminal device 200 transmits the sidelink signal to the other terminal device 200 in the PC5 link, and receives the sidelink signal from the other terminal device 200. Hereinafter, the transmission and reception of the sidelink signal by the terminal device 200 will be collectively referred to as sidelink communication. The terminal device 200 may be able to use an automatic retransmission technology such as hybrid automatic repeat request (HARQ) when performing the sidelink communication.

The terminal device 200 may be capable of non-orthogonal multiple access (NOMA) communication with the base station 100. Note that the terminal device 200 may also be capable of NOMA communication in communication (sidelink) with the other terminal device 200. Furthermore, the terminal device 200 may be capable of low power wide area (LPWA) communication with other communication devices (for example, the base station 100 and another terminal device 200). In addition, the radio communication used by the terminal device 200 may be radio communication using a millimeter wave or a terahertz wave. Note that the radio communication (including sidelink communication) used by the terminal device 200 may be radio communication using radio waves or wireless communication using infrared rays or visible light (optical wireless).

As described above, in sidelink communication in 5G NR, V2X communication is one of main use cases. Platooning, Advanced driving, Extended sensor, and Remote driving have been studied as specific use cases of V2X communication.

Further, sidelink communication is not limited to V2X communication, and can be used in various use cases. For example, the automation factory is one of use cases in which sidelink communication can be utilized. In such a factory, it is considered that a large number of devices such as sensors and cameras are installed and directly communicate with each other.

### <1.2. Example of Sidelink Communication>

### (Conventional Frame Configuration)

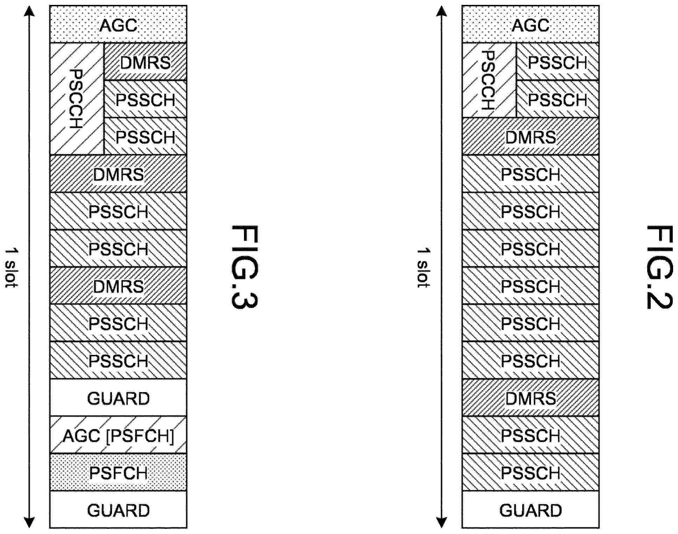

First, a frame configuration in conventional sidelink communication will be described. FIGS. 2 and 3 are diagrams illustrating an example of a frame configuration in sidelink communication.

As illustrated in FIGS. 2 and 3, in conventional sidelink communication in the 3GPP, signal transmission and reception are performed on the basis of a frame configuration with a slot including 14 symbols as a minimum unit. Here, in a case where the subcarrier interval is 15 kHz, the time length of one slot is 1 millisecond.

As described above, in conventional sidelink communication, V2X communication is mainly assumed as a use case, and a delay condition (delay requirements) required in conventional sidelink communication is 10 milliseconds. Therefore, there is no problem even if the frame configuration adopted in the sidelink communication is a frame configuration in which one slot is a minimum unit as illustrated in FIGS. 2 and 3.

However, in the future sidelink communication, it is conceivable that an ultra-low delay is required, for example, less than 1 millisecond. Therefore, the frame configuration adopted in the conventional sidelink communication cannot cope with a use case in which low delay is required.

### (Frame Configuration in Embodiment)

Therefore, in the embodiment of the present disclosure, it is assumed that the communication system 1 performs sidelink communication on the basis of a sub-slot including symbols shorter than the slot. Since the transmission unit of the packet is a sub-slot shorter than the slot, the communication system 1 can allocate radio resources faster to the packet for which low delay is required. As a result, the communication system 1 can transmit, for example, the URLLC packet with a lower delay.

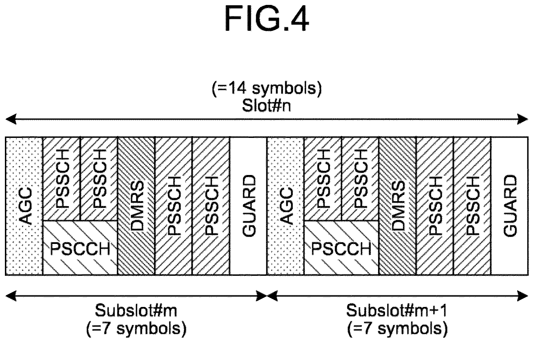

FIG. 4 is a diagram illustrating an example of a frame configuration in sidelink communication according to an embodiment of the present disclosure.

As illustrated in FIG. 4, a slot (Slot#n) including 14 symbols includes two sub-slots (Subslot#m, Subslot#m + 1) each including seven symbols. As described above, in the embodiment of the present disclosure, a plurality of sub-slots having the same size (the number of symbols) can be arranged in one slot.

In the sidelink communication according to the embodiment of the present disclosure, the terminal device 200 performs the sidelink communication based on at least one of the slot illustrated in FIG. 1 or 2 and the sub-slot illustrated in FIG. 4.

### (Definitions)

The sidelink communication in the embodiment of the present disclosure is based on the radio access schemes of LTE V2X and NR V2X, and an overall description thereof is described in 3GPP TR37.985.

Here, in the embodiment of the present disclosure, a group of sidelink channels and/or signals transmitted from a certain terminal device 200 (Tx UE) on the transmission side to the terminal device 200 (Rx UE) on the reception side by unicast, groupcast, or broadcast is defined as one sidelink communication.

That is, in the example of FIG. 2, auto gain control (AGC), physical sidelink control channel (PSCCH), physical sidelink shared channel (PSSCH), demodulation reference signal (DMRS), and GUARD transmitted in all symbols in one slot are defined as one sidelink transmission.

In the example of FIG. 3, AGC, PSCCH, PSSCH, DMRS, and GUARD transmitted in the first to eleventh symbols in one slot are defined as one sidelink transmission. In the example of FIG. 3, AGC, physical sidelink feedback channel (PSFCH), and GUARD transmitted in the 12th to 14th symbols in one slot are defined as one sidelink transmission. In this way, a plurality of sidelink transmissions may be included in one slot.

Note that the same Tx UE can continuously perform a plurality of sidelink transmissions. In this case, it is assumed that the plurality of sidelink transmissions are different sidelink transmissions.

### (Pre-emption in Sidelink Communication)

Here, a general pre-emption operation in sidelink communication will be described. Pre-emption is a technology for changing a schedule of radio resources in radio resources already scheduled to be used. The terminal device 200 can change the schedule of the radio resource by performing the pre-emption operation on the already scheduled radio resource, and can perform its own sidelink transmission.

### (Pre-emption to Own Device)

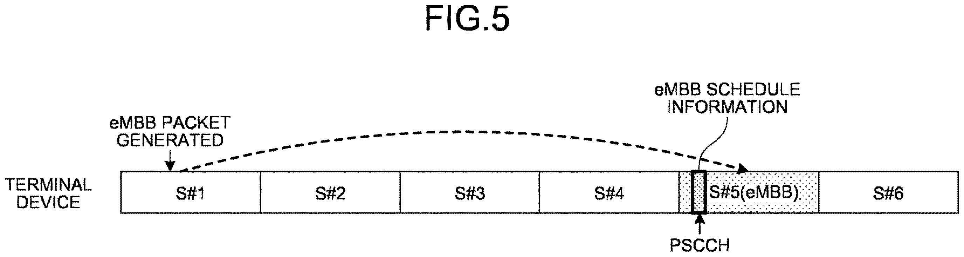

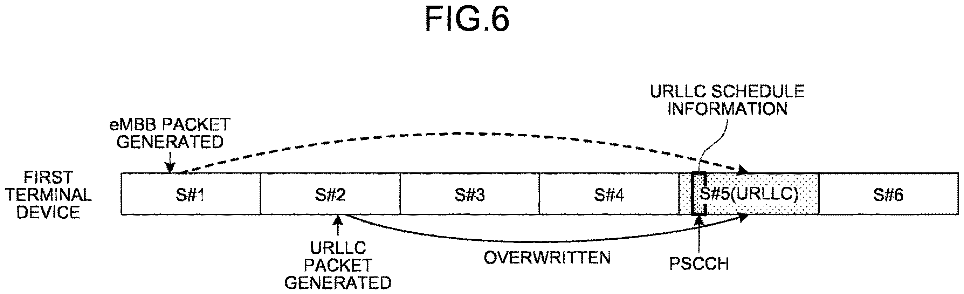

FIG. 5 is a diagram for explaining an example of sidelink communication. FIG. 6 is a diagram for explaining an example of the pre-emption operation executed in sidelink communication. In FIG. 6, the terminal device 200 performs pre-emption on a radio resource scheduled by itself.

As illustrated in FIG. 5, the terminal device 200 schedules radio resources so as to transmit, in the slot S#5, an eMBB packet generated in the slot S#1. In this case, the terminal device 200 transmits the schedule information (eMBB schedule information) for transmitting the eMBB packet in the sidelink control signal channel (PSCCH) of the slot S#5 in which the eMBB packet is transmitted. As described above, in FIG. 5, the terminal device 200 transmits the schedule information in the same slot as the slot S#5 in which the eMBB packet is transmitted.

Here, as illustrated in FIG. 6, it is assumed that a URLLC packet occurs in the slot S#2. In this case, the terminal device 200 performs pre-emption of a resource (slot S#5) to which the eMBB packet is scheduled to be transmitted. That is, the terminal device 200 changes (overwrites) the packet to be transmitted in the slot S#5 from the eMBB packet to the URCCL packet.

As described above, in this example, the terminal device 200 transmits the schedule information (URLLC schedule information) for transmitting the URLLC packet in the PSCCH of the slot in which the packet is transmitted. Therefore, as illustrated in FIG. 6, the terminal device 200 transmits the URLLC schedule information and the URCCL packet in the slot S#5.

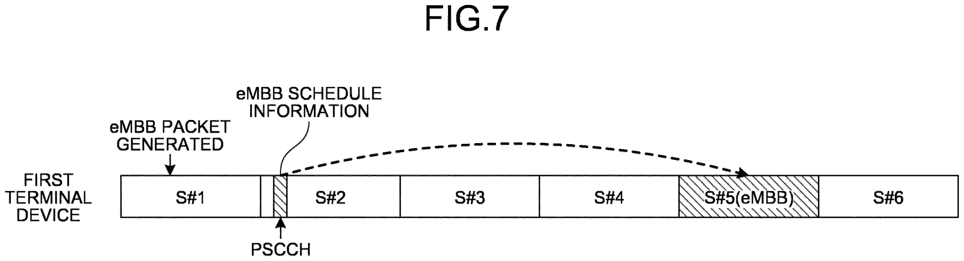

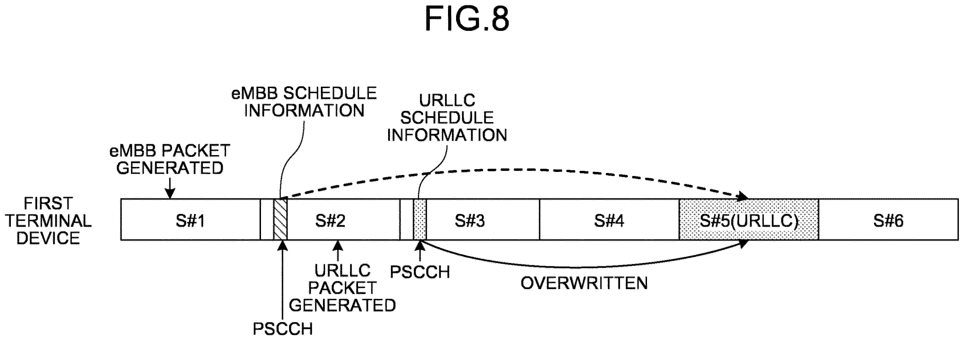

The schedule information may be transmitted in a slot before the slot in which the packet is transmitted. This point will be described with reference to FIGS. 7 and 8.

FIG. 7 is a diagram for explaining another example of sidelink communication. FIG. 8 is a diagram for explaining another example of a pre-emption operation executed in sidelink communication. In FIG. 8, the terminal device 200 performs pre-emption on a radio resource scheduled by itself.

As illustrated in FIG. 7, the terminal device 200 schedules radio resources so as to transmit, in the slot S#5, an eMBB packet generated in the slot S#1. In this case, the terminal device 200 transmits the eMBB schedule information on the PSCCH in the slot S#2 before the slot S#5 in which the eMBB packet is transmitted. Thereafter, the terminal device 200 transmits the eMBB packet in the slot S#5 on the basis of the eMBB schedule information transmitted in the slot S#2.

Here, as illustrated in FIG. 8, it is assumed that a URLLC packet occurs in the slot S#2. In this case, the terminal device 200 performs pre-emption of a resource (slot S#5) to which the eMBB packet is scheduled to be transmitted. That is, the terminal device 200 changes the packet to be transmitted in the slot S#5 from the eMBB packet to the URCCL packet.

As described above, in this example, the terminal device 200 transmits the schedule information in the PSCCH which is prior to the slot in which the packet is transmitted. Therefore, as illustrated in FIG. 8, the terminal device 200 transmits new URLLC schedule information in the slot S#3. As a result, the packet transmitted in the slot S#5 is overwritten with the URLLC packet. The terminal device 200 transmits the URCCL packet in the slot S#5 on the basis of the URLLC schedule information transmitted in the slot S#3.

### (Pre-emption to Other Devices)

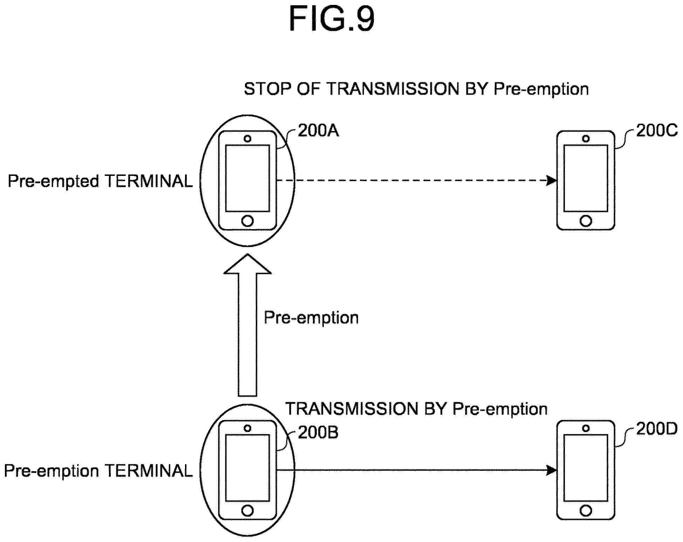

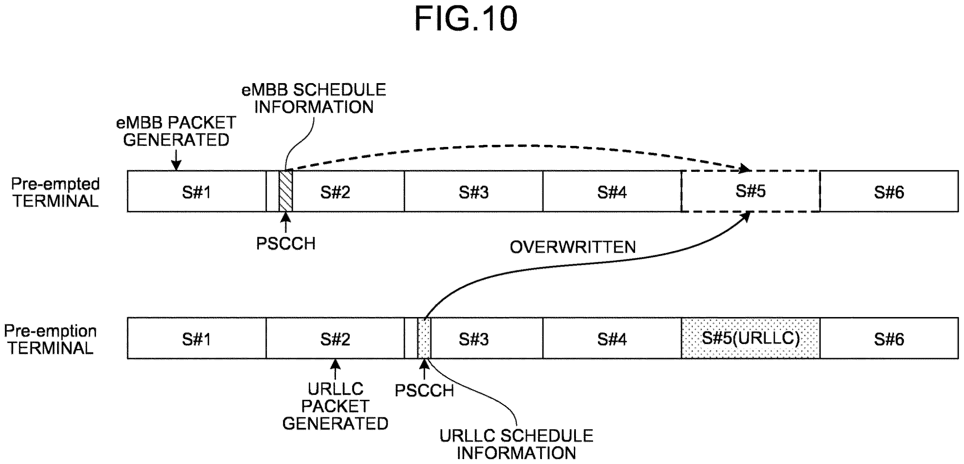

In the example described above, the terminal device 200 performs pre-emption on the radio resource scheduled by itself, but the present invention is not limited thereto. The terminal device 200 can perform pre-emption on a radio resource scheduled by another device. This point will be described with reference to FIGS. 9 and 10.

FIG. 9 is a diagram for explaining an example of a pre-emption operation according to an embodiment of the present disclosure. Hereinafter, the terminal device 200 that performs pre-emption on radio resources will be referred to as a pre-emption terminal 200B, and the terminal device 200 that is processed by pre-emption will be referred to as a pre-empted terminal 200A.

As illustrated in FIG. 9, the pre-empted terminal 200A performs sidelink transmission to a terminal device 200C. That is, the pre-empted terminal 200A is a Tx UE, and the terminal device 200C is an Rx UE. The pre-empted terminal 200A performs sidelink communication with the terminal device 200C.

A pre-emption terminal 200B performs sidelink transmission to a terminal device 200D. That is, the pre-emption terminal 200B is a Tx UE, and the terminal device 200D is an Rx UE. The pre-emption terminal 200B performs sidelink communication with the terminal device 200D.

At this time, the pre-emption terminal 200B performs pre-emption on the radio resource scheduled by the pre-empted terminal 200A. The pre-empted terminal 200A that has received pre-emption from the pre-emption terminal 200B stops sidelink transmission to the terminal device 200C in response to the pre-emption (stop of transmission by pre-emption).

The pre-emption terminal 200B performs sidelink transmission to the terminal device 200D using the pre-empted radio resource (transmission by pre-emption).

Note that the pre-emption terminal 200B performs the pre-emption operation in a case where the radio resource for performing the sidelink transmission is not available.

Next, with reference to FIG. 10, a description will be given of a general pre-emption operation in a case where a radio resource of another device is pre-empted. FIG. 10 is a diagram for explaining an example of a pre-emption operation executed in sidelink communication.

As illustrated in FIG. 10, the pre-empted terminal 200A schedules radio resources so as to transmit, in the slot S#5, an eMBB packet generated in the slot S#1. In this case, the pre-empted terminal 200A transmits the eMBB schedule information in the PSCCH of the slot S#2 which is the most recent slot of the slot S#1 in which the eMBB packet has occurred. Thereafter, the pre-empted terminal 200A stands by for transmission of the eMBB packet until the slot S#5.

Here, as illustrated in FIG. 10, it is assumed that a URLLC packet is generated in the slot S#2 in the pre-emption terminal 200B. In this case, the pre-emption terminal 200B performs pre-emption of a resource (slot S#5) in which the pre-empted terminal 200A is scheduled to transmit the eMBB packet.

In this case, the pre-emption terminal 200B transmits the URLLC schedule information for transmitting the URLLC packet in the PSCCH of the slot S#3 which is the most recent slot of the slot S#2 in which the URLLC packet has occurred.

The pre-empted terminal 200A that has received the URLLC schedule information stops (terminates) sidelink transmission in the radio resource (slot S#5) in which the eMBB packet is scheduled to be transmitted as a pre-empted operation.

The pre-emption terminal 200B transmits a URLLC packet in the slot S#5 in which the pre-empted terminal 200A is scheduled to perform sidelink transmission of the eMBB packet.

Note that, here, data transmitted by the pre-empted terminal 200A is referred to as an eMBB packet, and data transmitted by the pre-emption terminal 200B is referred to as a URLLC packet, but the present invention is not limited thereto. In a case where data for which low delay is requested (for example, data having a higher priority than data transmitted by the pre-empted terminal 200A) is transmitted and there is no radio resource available for transmitting the data, the pre-emption terminal 200B performs pre-emption.

In addition, the schedule information (eMBB schedule information and URLLC schedule information) described above includes at least one of identification information regarding Tx UE (terminal device 200), information regarding radio resources to be used, and information repeatedly transmitted.

### <1.3. Problem>

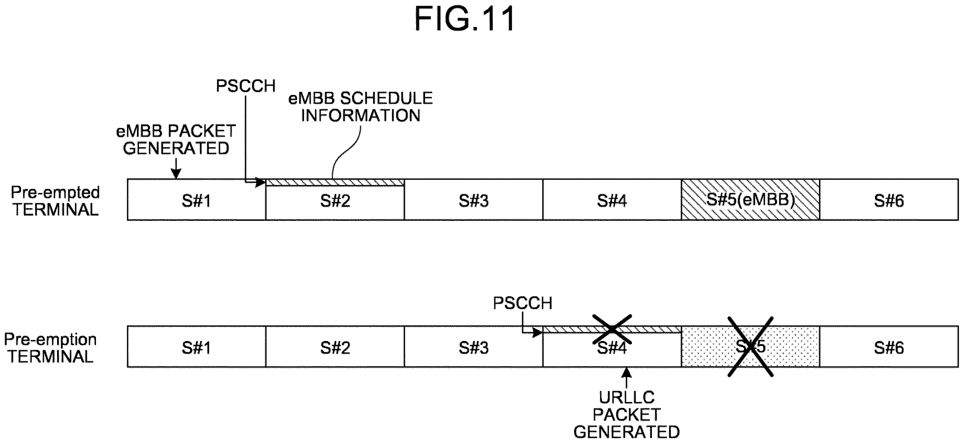

Here, in the pre-emption operation described above, there is a case where the low delay requirements cannot be satisfied even if the pre-emption terminal 200B performs pre-emption. As described above, when pre-emption is performed, the pre-emption terminal 200B transmits the URLLC schedule information using the PSCCH. However, the URLLC packet does not necessarily occur at the boundary of the slot. In particular, in a case where traffic (URLLC packet) occurs at a timing later than the PSCCH in the slot, the timing at which the pre-emption terminal 200B transmits the URLLC schedule information becomes the next slot or later. As a result, there is a case where the pre-emption terminal 200B cannot perform pre-emption. This point will be described with reference to FIG. 11.

FIG. 11 is a diagram for explaining an example of sidelink communication in which pre-emption cannot be performed. Note that FIG. 11 illustrates a case where the PSCCH is transmitted using the predetermined frequency resource of the slot, but the same applies to a case where the PSCCH is transmitted using the predetermined time resource of the slot (see FIG. 10).

As illustrated in FIG. 11, the pre-empted terminal 200A schedules radio resources so as to transmit, in the slot S#5, an eMBB packet generated in the slot S#1. In this case, the pre-empted terminal 200A transmits the eMBB schedule information in the PSCCH of the slot S#2 which is the most recent slot of the slot S#1 in which the eMBB packet has occurred. Thereafter, the pre-empted terminal 200A stands by for transmission of the eMBB packet until the slot S#5.

Here, as illustrated in FIG. 11, it is assumed that a URLLC packet is generated in the slot S#4 in the pre-emption terminal 200B. In this case, if the pre-emption terminal 200B can pre-empt the resource (slot S#5) in which the pre-empted terminal 200A is scheduled to transmit the eMBB packet, the pre-emption terminal 200B can transmit the URLLC packet with a low delay.

However, as illustrated in FIG. 11, in the slot S#4, the transmission of the PSCCH is already started at the timing when the URLLC packet occurs. Therefore, the pre-emption terminal 200B cannot transmit the URLLC schedule information at the timing before the slot S#5 in which pre-emption is desired and after the occurrence of the URLLC packet.

Therefore, in the example of FIG. 11, the pre-emption terminal 200B cannot pre-empt the slot S#5, and the timing to transmit the URLLC packet is after the slot S#7 (not illustrated).

As described above, in the conventional pre-emption, the pre-emption terminal 200B cannot perform pre-emption, and a packet transmission delay increases.

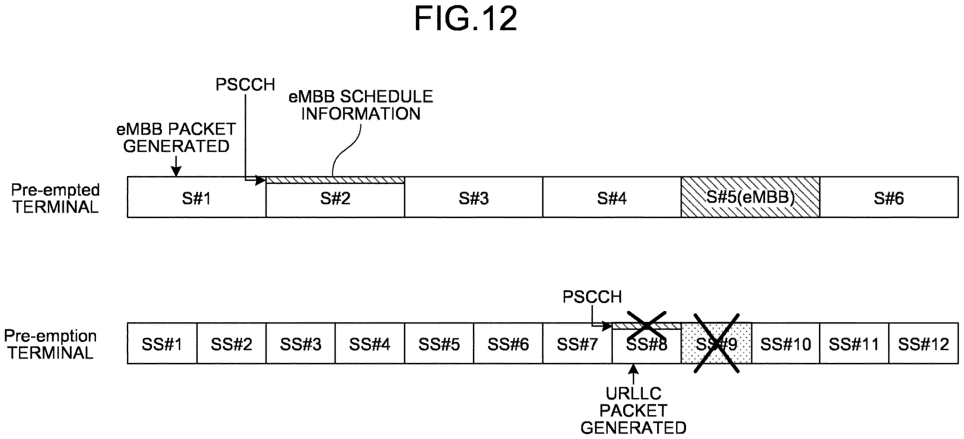

In particular, in a case where the pre-emption terminal 200B measures a packet delay reduction by using a sub-slot as illustrated in FIG. 4, an influence of a transmission delay due to the fact that pre-emption cannot be performed increases. This point will be described with reference to FIG. 12.

FIG. 12 is a diagram for explaining another example of sidelink communication in which pre-emption cannot be performed. Note that FIG. 12 illustrates a case where the PSCCH is transmitted using the predetermined frequency resource of the slot, but the same applies to a case where the PSCCH is transmitted using the predetermined time resource of the slot (see FIG. 10).

As illustrated in FIG. 12, the pre-empted terminal 200A schedules radio resources so as to transmit, in the slot S#5, an eMBB packet generated in the slot S#1. In this case, the pre-empted terminal 200A transmits the eMBB schedule information in the PSCCH of the slot S#2 which is the most recent slot of the slot S#1 in which the eMBB packet has occurred. Thereafter, the pre-empted terminal 200A stands by for transmission of the eMBB packet until the slot S#5.

Here, as illustrated in FIG. 12, it is assumed that a URLLC packet is generated in the sub-slot SS#8 in the pre-emption terminal 200B. In this case, if the pre-emption terminal 200B can pre-empt the resource (slot S#5) in which the pre-empted terminal 200A is scheduled to transmit the eMBB packet, the pre-emption terminal 200B can transmit the URLLC packet with a low delay.

However, as illustrated in FIG. 12, in the sub-slot SS#8, the transmission of the PSCCH is already started at the timing when the URLLC packet occurs. Therefore, the pre-emption terminal 200B cannot transmit the URLLC schedule information at the timing before the slot S#5 in which pre-emption is desired and after the occurrence of the URLLC packet.

Therefore, in the example of FIG. 12, the pre-emption terminal 200B cannot pre-empt the slot S#5, and the timing to transmit the URLLC packet is after the sub-slot SS#12.

As described above, in the conventional pre-emption, the pre-emption terminal 200B cannot perform pre-emption, and a packet transmission delay increases. In particular, when the pre-emption terminal 200B once fails the pre-emption while using the sub-slot, the pre-emption terminal 200B needs to perform the next pre-emption in accordance with the radio resource of the long slot of the pre-empted terminal 200A. Therefore, the pre-emption terminal 200B cannot transmit the URLLC packet over a plurality of sub-slots, and the transmission delay of the URLLC packet increases even though the sub-slots are used to satisfy the low delay requirements.

Note that FIGS. 11 and 12 illustrate a case where the PSCCH is transmitted using the predetermined frequency resource of the slot, but the delay can occur similarly in a case where the PSCCH is transmitted using the predetermined time resource of the slot (see FIG. 10). For example, in a case where a URLLC packet occurs after the timing (symbol) of transmitting the PSCCH of the slot S#4 in FIG. 11, a transmission delay of the URLLC packet occurs similarly to FIG. 12.

### <1.4. Outline of Proposed Technology>

Therefore, the communication method executed in the communication system 1 according to the embodiment of the present disclosure includes that the pre-empted terminal 200A performs sidelink communication with the terminal device 200C (an example of a first communication device). The communication method includes monitoring whether or not pre-emption information related to pre-emption is transmitted from a pre-emption terminal 200B (an example of a second communication device) at a predetermined timing in a case where the pre-empted terminal 200A is transmitting data to a terminal device 200C. The communication method includes stopping transmission of data to the terminal device 200C when the pre-emption information is received by the pre-empted terminal 200A.

Furthermore, the communication method executed in the communication system 1 according to the embodiment of the present disclosure includes that the pre-emption terminal 200B transmits pre-emption information at a predetermined timing to the pre-empted terminal 200A (an example of the second communication device) that is transmitting data to the terminal device 200C (an example of the first communication device). The pre-empted terminal 200A is a device that performs sidelink communication with the terminal device 200C. The pre-emption information is information for pre-empting a radio resource used by the pre-empted terminal 200A to transmit data. The communication method includes performing sidelink communication by the pre-emption terminal 200B using radio resources.

Furthermore, the communication system 1 according to the embodiment of the present disclosure includes a pre-empted terminal 200A (an example of a pre-empted device) and a pre-emption terminal 200B (an example of a pre-emption device). The pre-empted terminal 200A performs sidelink communication with the terminal device 200C (an example of the first communication device). The pre-empted terminal 200A is pre-empted from the pre-emption terminal 200B. The pre-emption terminal 200B pre-empts a resource used by the pre-empted terminal 200A.

In a case where data is transmitted to the terminal device 200C, the pre-empted terminal 200A monitors whether or not pre-emption information related to pre-emption is transmitted from the pre-emption terminal 200B at a predetermined timing.

When pre-empting a resource used by the pre-empted terminal 200A, the pre-emption terminal 200B transmits pre-emption information at a predetermined timing to the pre-empted terminal 200A transmitting data.

As described above, the pre-emption terminal 200B of the communication system 1 according to the embodiment of the present disclosure transmits the pre-emption information at a predetermined timing when the pre-empted terminal 200A is transmitting the eMBB packet. As a result, the pre-emption terminal 200B can pre-empt the slot S#5 in which the pre-empted terminal 200A is transmitting a packet, and can further reduce the delay of the URLLC packet.

### <<2. Configuration Example of Communication System>>

### <2.1. Configuration Example of Base Station Device>

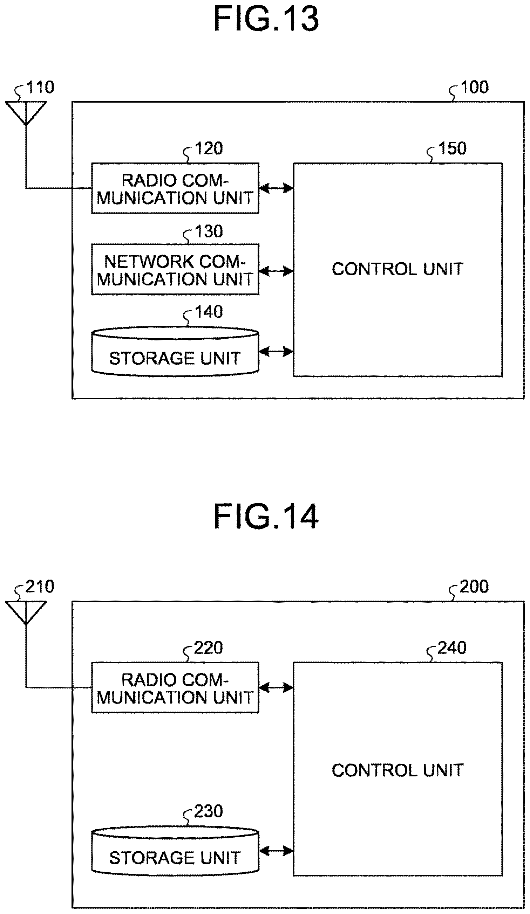

FIG. 13 is a block diagram illustrating a configuration example of the base station 100 according to an embodiment of the present disclosure. Referring to FIG. 13, the base station 100 includes an antenna unit 110, a radio communication unit 120, a network communication unit 130, a storage unit 140, and a control unit 150.

### (1) Antenna Unit 110

The antenna unit 110 radiates a signal output from the radio communication unit 120 into space as a radio wave. Furthermore, the antenna unit 110 converts a radio wave in space into a signal and outputs the signal to the radio communication unit 120. Note that the antenna unit 110 of the present embodiment includes a plurality of antenna elements and can form a beam.

### (2) Radio Communication Unit 120

The radio communication unit 120 transmits and receives signals. For example, the radio communication unit 120 transmits a downlink signal to the terminal device 200 and receives an uplink signal from the terminal device 200. The radio communication unit 120 operates under the control of the control unit 150. Note that the radio communication unit 120 of the present embodiment can communicate with the terminal device 200 by forming a plurality of beams by the antenna unit 110.

### (3) Network Communication Unit 130

The network communication unit 130 transmits and receives information. For example, the network communication unit 130 transmits information to another node and receives information from the other node. For example, the other node includes another base station 100 and a core network node. The network communication unit 130 communicates with other devices under the control of the control unit 150.

### (4) Storage Unit 140

The storage unit 140 temporarily or permanently stores programs and various data for the operation of the base station 100. The storage unit 140 functions as a storage unit of the base station 100.

### (5) Control Unit 150

The control unit 150 is a controller that controls each unit of the base station 100. The control unit 150 is implemented by, for example, a processor such as a central processing unit (CPU), or a micro processing unit (MPU). For example, the control unit 150 is implemented by a processor executing various programs stored in a storage device inside the base station 100 using a random access memory (RAM) or the like as a work area. Furthermore, the control unit 150 may be implemented by, for example, an integrated circuit such as an application specific integrated circuit (ASIC) or a field programmable gate array (FPGA). Any of the CPU, the MPU, the ASIC, and the FPGA can be regarded as a controller.

### <2-2. Configuration of Terminal Device>

FIG. 14 is a block diagram illustrating a configuration example of the terminal device 200 according to an embodiment of the present disclosure. Referring to FIG. 14, the terminal device 200 includes an antenna unit 210, a radio communication unit 220, a storage unit 230, and a control unit 240.

### (1) Antenna Unit 210

The antenna unit 210 radiates a signal output from the radio communication unit 220 into space as a radio wave. Furthermore, the antenna unit 210 converts a radio wave in space into a signal and outputs the signal to the radio communication unit 220. Note that the antenna unit 210 of the present embodiment includes a plurality of antenna elements and can form a beam.

### (2) Radio Communication Unit 220

The radio communication unit 220 transmits and receives signals. For example, the radio communication unit 220 receives a downlink signal from the base station 100 and transmits an uplink signal to the base station 100. The radio communication unit 220 operates under the control of the control unit 240. Note that the radio communication unit 220 of the present embodiment can communicate with the base station 100 by forming a plurality of beams by the antenna unit 210.

### (3) Storage Unit 230

The storage unit 230 temporarily or permanently stores programs and various data for the operation of the terminal device 200. The storage unit 230 functions as a storage unit of the terminal device 200.

### (4) Control Unit 240

The control unit 240 is a controller that controls each unit of the terminal device 200. The control unit 240 is implemented by, for example, a processor such as a CPU or an MPU. For example, the control unit 240 is implemented by a processor executing various programs stored in a storage device inside the terminal device 200 using a RAM or the like as a work area. Note that the control unit 240 may be implemented by an integrated circuit such as an ASIC or an FPGA. Any of the CPU, the MPU, the ASIC, and the FPGA can be regarded as a controller.

### <<3. Technical Features>>

Hereinafter, a pre-emption operation in an embodiment of the present disclosure will be described. In the pre-emption operation in the embodiment of the present disclosure, the pre-empted terminal 200A monitors pre-emption information regarding pre-emption during transmission of its own data. As a result, the pre-empted terminal 200A can acquire pre-emption information even in a frame during sidelink transmission. The pre-empted terminal 200A that has received the pre-emption information selects and executes one operation from a plurality of pre-empted operations to be described later.

As a result, the pre-emption terminal 200B can perform the pre-emption operation on the slot being transmitted. Therefore, the pre-emption terminal 200B can further reduce a transmission delay of a signal for which a low delay is required (for example, a URLLC packet).

Note that, also in the following description, as illustrated in FIG. 9, it is assumed that a Tx UE (pre-empted terminal 200A) that performs sidelink communication with the terminal device 200C is pre-empted by a Tx UE (pre-emption terminal 200B) that performs sidelink communication with the terminal device 200D. Here, in order to simplify the description, it is assumed that there is one pre-empted terminal 200A, but there may be a plurality of pre-empted terminals 200A.

### <3.1. First Monitoring Method>

### (Outline of First Monitoring Method)

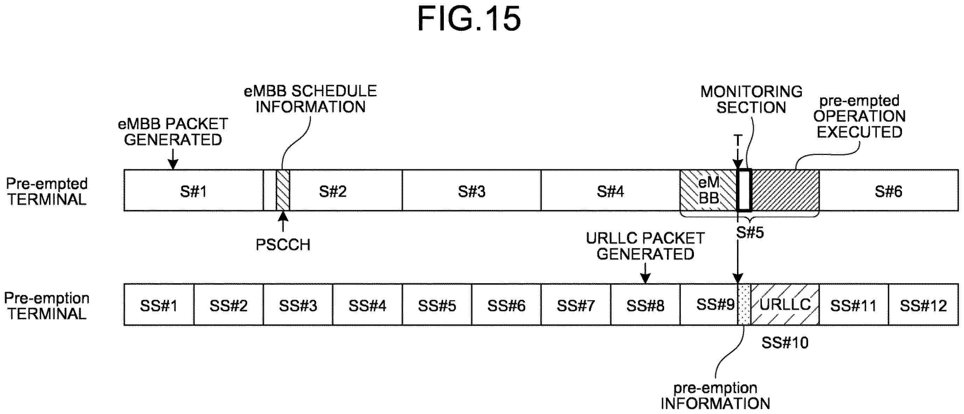

FIG. 15 is a diagram for explaining a first monitoring method according to an embodiment of the present disclosure. In the first monitoring method, when transmitting its own data, the pre-empted terminal 200A stops data transmission at a predetermined timing and monitors pre-emption information.

Note that, in FIG. 15, the pre-empted terminal 200A transmits an eMBB packet using a slot, and the pre-emption terminal 200B transmits a URLLC packet using a sub-slot having a slot length shorter than that of the slot.

As illustrated in FIG. 15, the pre-empted terminal 200A schedules radio resources so as to transmit, in the slot S#5, an eMBB packet generated in the slot S#1. In this case, the pre-empted terminal 200A transmits the eMBB schedule information in the PSCCH of the slot S#2 which is the most recent slot of the slot S#1 in which the eMBB packet has occurred. Thereafter, the pre-empted terminal 200A stands by for transmission of the eMBB packet until the slot S#5.

Here, as illustrated in FIG. 15, it is assumed that a URLLC packet is generated in the sub-slot SS#8 in the pre-emption terminal 200B. In this case, the pre-emption terminal 200B transmits pre-emption information to the pre-empted terminal 200A at a predetermined timing T. In the example of FIG. 15, the predetermined timing T is the end (end symbol) of the sub-slot SS#9. That is, the pre-emption terminal 200B transmits the pre-emption information at the end timing of the sub-slot SS#9.

The pre-empted terminal 200A starts transmitting the eMBB packet in the slot S#5. The pre-empted terminal 200A stops the transmission of the eMBB packet at a predetermined timing T of the slot S#5, and monitors the pre-emption information in a monitoring section. The monitoring section is a section starting at the predetermined timing T.

As described above, the predetermined timing T is, for example, a symbol that can store data at the end of the sub-slot (sub-slot SS#9) among 14 symbols included in one slot (slot S#5). The predetermined timing T is a timing at which pre-emption information is transmitted.

Here, it is assumed that pre-emption information transmitted by the pre-emption terminal 200B is information indicating that radio resources (at least a part of the slot S#9) of the pre-empted terminal 200A are to be pre-empted.

In this case, the pre-empted terminal 200A performs the pre-empted operation in the radio resource designated by the pre-emption information (in FIG. 15, a radio resource corresponding to the sub-slot SS#10). For example, the pre-empted terminal 200A selects one of the following operations as the pre-empted operation.
- Cancel use of radio resource
- Cancel use of radio resource and reselect transmission resource

Note that the transmission resource reselected by the pre-empted terminal 200A may be another radio resource prepared by the pre-empted terminal 200A.

Here, it is assumed that the pre-empted terminal 200A stops using radio resources as the pre-empted operation. In this case, as illustrated in FIG. 15, in the slot S#9 after the end of the monitoring section, the pre-empted terminal 200A performs the pre-empted operation and stops the transmission of the eMBB packet.

The pre-emption terminal 200B transmits the URLLC packet in the radio resource designated by the pre-emption information (in FIG. 15, a radio resource corresponding to the sub-slot SS#10). In other words, the pre-emption terminal 200B transmits the URLLC packet in a section (the sub-slot SS#10) in which the pre-empted terminal 200A stops the transmission. As a result, the pre-emption terminal 200B can further suppress the transmission delay of the URLLC packet.

It is assumed that the pre-empted terminal 200A stops using radio resources, performs reselection of transmission resources, and transmits, using the reselected transmission resources, a remaining eMBB packet which is not transmitted (hereinafter, also referred to as a remaining packet). In this case, the pre-empted terminal 200A changes at least one of the coding rate and the modulation multi-level number in accordance with the remaining packet (or the transmission resource for transmitting the remaining packet), and transmits the remaining packet.

Furthermore, in a case of reselecting the transmission resource, the pre-empted terminal 200A can include pre-empted information indicating that pre-emption has been performed once in schedule information to be transmitted on the PSCCH. That is, the pre-empted terminal 200A can transmit the schedule information including pre-empted information on the PSCCH in order to reselect a transmission resource.

As a result, the pre-emption terminal 200B can preferentially exclude the radio resource scheduled by the schedule information including the pre-empted information from the pre-emption target. That is, the radio resource reselected by the pre-empted operation is less likely to be preferentially pre-empted, and the fairness of the use of the radio resource by the terminal device 200 can be secured.

Note that the pre-empted information is not limited to information indicating that pre-emption has been performed once. The pre-empted information added to the schedule information when the pre-empted terminal 200A reselects the transmission resource may be any information for preferentially excluding the reselected radio resource from the pre-emption target. For example, the pre-empted information may be information indicating to be operated as the pre-empted terminal 200A in a certain period.

### (Pre-emption Information)

The pre-emption information according to the embodiment of the present disclosure is control information for the pre-emption terminal 200B to perform a pre-emption operation. Note that details of the pre-emption information will be described later in <3.7. Example of Information>.

The pre-emption information includes, for example, transmission information indicating to be a signal for transmitting information regarding pre-emption. For example, in a case where the symbol position at which the pre-emption information is transmitted is arranged at a position similar to a physical sidelink feedback channel (PSFCH), the transmission information is used to distinguish between the pre-emption information and the conventional ACK information. The transmission information can be represented as a one-bit flag. Alternatively, the transmission information may be represented by a difference in the size of the information region of the pre-emption information.

The pre-emption information may include, for example, at least one of information of a sub-channel (sub CH) to be pre-empted and information of a sub-slot as resource information regarding a radio resource to be pre-empted.

The information of the sub-channel includes, for example, at least one of position information regarding the position of the radio resource to be pre-empted in the frequency direction of the sub CH and information regarding the number of sub CHs. The information on the sub-slot includes, for example, at least one of position information on the position of the sub-slot in the time direction and information on the number of sub-slots.

The information of the sub-channel and the information of the sub-slot may be used as information designating a radio resource by combination. The resource information may include a plurality of combinations of subchannels and sub-slots. In this manner, a plurality of radio resources can be collectively designated by the resource information.

In a case where a plurality of radio resources are collectively designated as a target of pre-emption, the pre-emption information can include information indicating whether or not the radio resources allocated by the pre-empted terminal 200A for repeated transmission or retransmission are used as they are. This information can be stored in pre-emption information as information indicating a specific pattern such as frequency hopping. Alternatively, when a new pattern is used, information indicating the new pattern may be stored in the pre-emption information.

The pre-emption information may include information related to a processing time based on capability information of the processing time. This information can be used for the pre-empted terminal 200A to estimate which radio resource is to be pre-empted, for example, when the resource for transmitting the pre-emption information is small. For example, it is assumed that a processing delay time of the pre-emption terminal 200B described in the pre-emption information is longer than a time to a radio resource to be used next. In this case, the pre-empted terminal 200A estimates that the next radio resource is not to be pre-empted. Alternatively, the pre-empted terminal 200A may use the radio resource for transmission until the symbol in which the processing time elapses.

Furthermore, the pre-emption information may include identification information for identifying from which pre-emption terminal 200B the various types of information described above have been transmitted.

### (Pre-empted Processing)

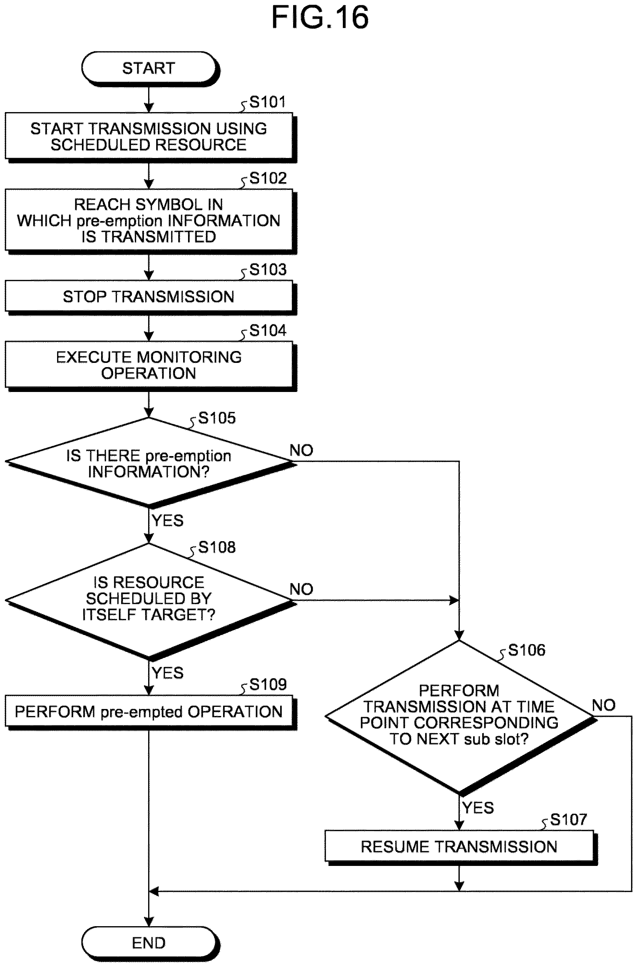

FIG. 16 is a flowchart illustrating an example of a procedure of pre-empted processing according to an embodiment of the present disclosure. The pre-empted processing is executed, for example, by the pre-empted terminal 200A.

As illustrated in FIG. 16, the pre-empted terminal 200A starts transmitting the eMBB packet using the scheduled resource (in FIG. 15, slot S#5) (Step S101).

Next, as illustrated in FIG. 16, it is assumed that a resource for transmitting an eMBB packet has reached a symbol in which pre-emption information is transmitted (predetermined timing T) (Step S102). In this case, the pre-empted terminal 200A stops the transmission of the eMBB packet (Step S103), and executes a monitoring operation of the pre-emption information in the monitoring section (Step S104) .

The pre-empted terminal 200A determines whether or not there is pre-emption information in the monitoring section (Step S105). If there is not the pre-emption information (Step S105; No), the pre-empted terminal 200A determines whether or not to perform transmission at a time point corresponding to the next sub-slot (sub-slot SS#10) (Step S106). That is, the pre-empted terminal 200A determines whether or not there is data to be transmitted after the end of the monitoring section.

If there is no data to be transmitted and it is determined not to perform transmission (Step S106; No), the pre-empted terminal 200A ends the process. On the other hand, if there is data to be transmitted and it is determined to perform transmission (Step S106; Yes), the pre-empted terminal 200A resumes transmission (Step S107), and ends the processing.

On the other hand, if there is the pre-emption information in the monitoring section (Step S105; Yes), the pre-empted terminal 200A determines whether or not a resource scheduled by the pre-empted terminal 200A itself is a target of pre-emption (Step S108). If it is not a target (Step S108; No), the pre-empted terminal 200A executes Step S106.

On the other hand, if the resource scheduled by the pre-empted terminal 200A itself is a target of pre-emption (Step S108; Yes), the pre-empted terminal 200A performs the pre-empted operation (Step S109), and ends the processing.

The pre-emption terminal 200B according to the embodiment of the present disclosure transmits pre-emption information at a predetermined timing T. The predetermined timing T is, for example, a specified timing for transmitting a symbol that can store data at the end of the sub-slot or pre-emption information. The pre-emption terminal 200B transmits a URLLC packet using a radio resource (sub-slot) designated by pre-emption information.

As a result, the pre-emption terminal 200B can perform the pre-emption operation even when the pre-empted terminal 200A is transmitting data, and the packet delay can be further reduced.

Further, the pre-emption terminal 200B transmits pre-emption information at a predetermined timing T that is not a PSCCH. The PSCCH is also used for transmission of other control information in addition to pre-emption. Therefore, when the pre-emption terminal 200B performs the pre-emption using the PSCCH of the slot (or the sub-slot), there is a possibility that it collides with the PSCCH transmitted by another terminal device 200 and the data transmission fails.

As described above, the pre-emption terminal 200B according to the embodiment of the present disclosure transmits pre-emption information at a predetermined timing T that is not a PSCCH (for example, PSFCH). As a result, the pre-emption terminal 200B can avoid a collision between the PSCCH transmitted by another terminal device 200 and the pre-emption information, and can transmit the pre-emption information more reliably.

### <3.2. Second Monitoring Method>

In the first monitoring method described above, the pre-empted terminal 200A stops data transmission at a predetermined timing T and monitors pre-emption information. That is, the pre-empted terminal 200A performs either transmitting data or receiving pre-emption information in the slot S#5. The first monitoring method is suitable for, for example, the terminal device 200 compatible with half duplex communication that performs one of transmission and reception.

The terminal device 200 that performs pre-emption according to the embodiment of the present disclosure is not limited to the terminal device 200 that performs half-duplex communication. The pre-emption according to an embodiment of the present disclosure can be applied to, for example, a terminal device 200 that supports full-duplex communication (hereinafter also referred to as FD) that simultaneously performs transmission and reception. An example of pre-emption performed by the terminal device 200 that performs FD in this manner will be described as a second monitoring method.

### (Outline of Second Monitoring Method)

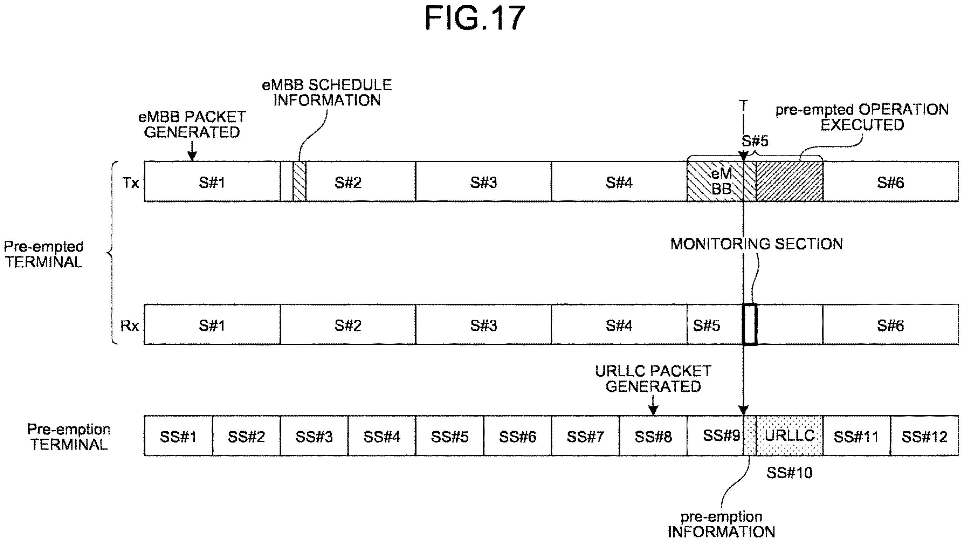

FIG. 17 is a diagram for explaining the second monitoring method according to an embodiment of the present disclosure. In the second monitoring method, when transmitting its own data, the pre-empted terminal 200A stops data transmission at a predetermined timing and monitors pre-emption information.

In the second monitoring method, the pre-empted terminal 200A performs FD. The upper diagram in FIG. 17 illustrates an example of transmission (Tx) by the pre-empted terminal 200A. Furthermore, the middle diagram in FIG. 17 illustrates an example of reception (Rx) by the pre-empted terminal 200A.

As illustrated in FIG. 17, the pre-empted terminal 200A schedules radio resources so as to transmit, in the slot S#5, an eMBB packet generated in the slot S#1. In this case, the pre-empted terminal 200A transmits the eMBB schedule information in the PSCCH of the slot S#2 which is the most recent slot of the slot S#1 in which the eMBB packet has occurred. Thereafter, the pre-empted terminal 200A stands by for transmission of the eMBB packet until the slot S#5.

Here, as in FIG. 15, the pre-emption terminal 200B transmits pre-emption information at a predetermined timing T.

In the example of FIG. 15, the pre-empted terminal 200A stops transmission of data at the predetermined timing T, however, in the second monitoring method, as in the upper diagram in FIG. 17, the pre-empted terminal 200A continues the data transmission even at the predetermined timing T. The pre-empted terminal 200A monitors whether or not pre-emption information arrives in a monitoring section starting from the predetermined timing T. As described above, in the second monitoring method, the pre-empted terminal 200A simultaneously transmits data and monitors pre-emption information at the predetermined timing T.

Note that the frequency resource (band) monitored by the pre-empted terminal 200A may be the same as or different from the frequency resource (band) used for data transmission.

In a case where the received pre-emption information indicates performing pre-emption on its own transmission resource (at least a part of the slot S#5), the pre-empted terminal 200A performs a pre-empted operation. The pre-empted operation is the same as the first monitoring method.

It is assumed that the pre-empted terminal 200A has not received pre-emption information in the monitoring section. Alternatively, it is assumed that the pre-emption information does not indicate performing pre-emption on its own transmission resource (for example, pre-emption information is information for pre-empting another terminal device 200). In this case, the pre-empted terminal 200A ends the FD operation (operation of simultaneously performing reception and transmission), and continues to transmit the eMBB packet.

Note that the pre-emption information is the same as that in the first monitoring method, and thus description thereof is omitted.

### (Pre-empted Processing)

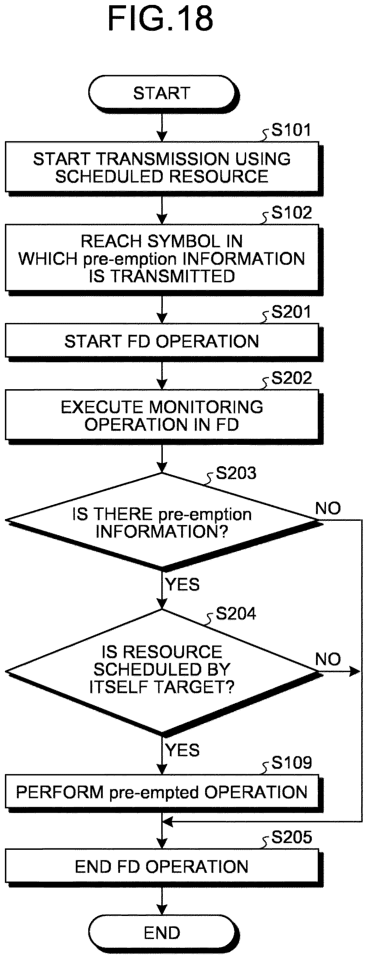

FIG. 18 is a flowchart illustrating another example of a procedure of pre-empted processing according to an embodiment of the present disclosure. The pre-empted processing is executed, for example, by the pre-empted terminal 200A. Note that the same processes as the pre-empted processing illustrated in FIG. 16 are denoted by the same reference numerals, and description thereof is omitted.

As illustrated in FIG. 18, in a case where the symbol in which the pre-emption information is transmitted (predetermined timing T) is reached in Step S102, the pre-empted terminal 200A starts the FD operation (Step S201).

The pre-empted terminal 200A executes a monitoring operation in the FD (Step S202). However, the pre-empted terminal 200A transmits the eMBB packet and simultaneously monitors the pre-emption information in the monitoring section.

The pre-empted terminal 200A determines whether or not there is pre-emption information in the monitoring section (Step S203). If there is not the pre-emption information (Step S203; No), the pre-empted terminal 200A executes Step S205.

On the other hand, if there is the pre-emption information in the monitoring section (Step S203; Yes), the pre-empted terminal 200A determines whether or not its scheduled resource is a target of pre-emption (Step S204). If it is not a target (Step S204; No), the pre-empted terminal 200A executes Step S205.

On the other hand, if the resource scheduled by the pre-empted terminal 200A itself is a target of pre-emption (Step S204; Yes), the pre-empted terminal 200A performs the pre-empted operation (Step S109).

The pre-empted terminal 200A ends the FD operation (Step S205). When the pre-empted terminal 200A performs the pre-empted operation in Step S109, the pre-empted terminal 200A stops transmitting the eMBB packet. In this case, when the pre-empted terminal 200A ends the FD operation, the pre-empted terminal 200A ends both the transmission of the eMBB packet and the monitoring of the pre-emption information.

On the other hand, when the pre-empted terminal 200A does not perform the pre-empted operation, the pre-empted terminal 200A stops the FD operation while transmitting the eMBB packet. That is, the pre-empted terminal 200A continues the transmission of the eMBB packet and terminates the monitoring of the pre-emption information.

As described above, in the second monitoring method, the pre-empted terminal 200A can monitor the pre-emption information while transmitting the eMBB packet, and can further suppress a decrease in the utilization efficiency of the radio resource.

### <3.3. Third Monitoring Method>

In the first and second monitoring methods described above, the number of pre-emption terminals 200B is one, but the present invention is not limited thereto. There may be a plurality of pre-emption terminals 200B. Such a case will be described as the third monitoring method.

Note that, although it is assumed here that the pre-empted terminal 200A performs half-duplex communication, the third monitoring method can also be applied to a case where the pre-empted terminal 200A performs full-duplex communication.

Furthermore, here, in order to simplify the description, a case where there are two pre-emption terminals 200B will be described. Hereinafter, in a case where it is necessary to distinguish the two pre-emption terminals 200B, the two pre-emption terminals 200B are distinguished as a first pre-emption terminal 200B1 and a second pre-emption terminal 200B2.

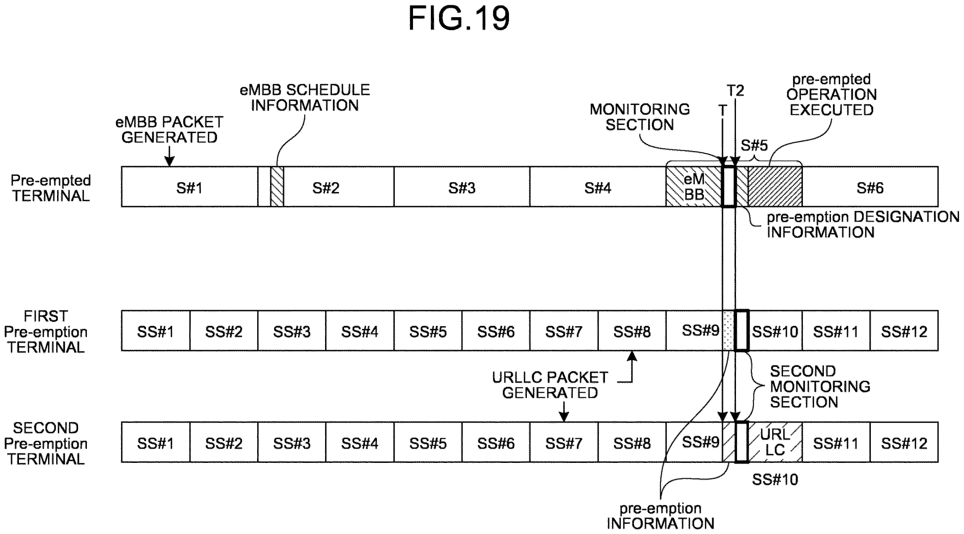

FIG. 19 is a diagram for explaining the third monitoring method according to an embodiment of the present disclosure. In the third monitoring method, when transmitting its own data, the pre-empted terminal 200A stops data transmission at a predetermined timing and monitors pre-emption information.

Note that, in FIG. 19, the pre-empted terminal 200A transmits an eMBB packet using a slot, and the pre-emption terminal 200B transmits a URLLC packet using a sub-slot having a slot length shorter than that of the slot.

As illustrated in FIG. 19, the pre-empted terminal 200A monitors the pre-emption information in a monitoring section from a predetermined timing T of the slot S#5.

As illustrated in FIG. 19, the first pre-emption terminal 200B1 in which a URLLC packet has occurred in the sub-slot SS#8 transmits pre-emption information (hereinafter, described as first pre-emption information) at a predetermined timing T (the last slot of the sub-slot SS#9) .

Further, the second pre-emption terminal 200B2 in which a URLLC packet has occurred in the sub-slot SS#7 transmits pre-emption information (hereinafter, described as second pre-emption information) at a predetermined timing T (the last slot of the sub-slot SS#9).

Here, the first pre-emption information and the second pre-emption information are transmitted so as to be orthogonal to each other in at least one of the time direction and the frequency direction in the subchannel so that the pre-empted terminal 200A can receive the information at the same time. Alternatively, the first and second pre-emption information received by the peripheral terminal device 200 or the base station 100 are notified by the terminal device 200 or the base station 100, thereby causing the pre-empted terminal 200A to acquire the first and second pre-emption information.

The pre-empted terminal 200A that has received the first and second pre-emption information in the monitoring section determines which of the first pre-emption terminal 200B1 and the second pre-emption terminal 200B2 is to be permitted to perform pre-emption based on the first and second pre-emption information.

The pre-empted terminal 200A notifies the first and second pre-emption terminals 200B1 and 200B2 of the determination result at the second timing T2 when the monitoring section ends. For example, the pre-empted terminal 200A transmits pre-emption designation information to the first and second pre-emption terminals 200B1 and 200B2. The pre-emption designation information is, for example, information for designating the terminal device 200 that is permitted to perform pre-emption. Here, it is assumed that the pre-empted terminal 200A determines to permit the second pre-emption terminal 200B2 to perform pre-emption.

The pre-empted terminal 200A that has transmitted the pre-emption designation information performs a pre-empted operation. Note that the pre-empted operation is the same as the first monitoring method.

Next, the first and second pre-emption terminals 200B1 and 200B2 monitor pre-emption designation information at the second timing T2. For example, the first and second pre-emption terminals 200B1 and 200B2 monitor the pre-emption designation information in the second monitoring section started from the second timing T2.

In the example of FIG. 19, the first and second pre-emption terminals 200B1 and 200B2 receive the pre-emption designation information for designating the second pre-emption terminal 200B2. In this case, the first pre-emption terminal 200B1 does not transmit the URLLC packet in the next sub-slot SS#10. On the other hand, the second pre-emption terminal 200B2 transmits a URLLC packet in the next sub-slot SS#10.

### (Pre-emption Designation Information)

Here, the pre-emption designation information may include designation identification information for identifying the designation information. The designation information is information for designating the pre-emption terminal 200B that is permitted to perform pre-emption by the pre-empted terminal 200A (hereinafter, also referred to as a permission terminal 200B).

The designation identification information is information indicating a correspondence relationship between a region of designation information designating the permission terminal 200B and the pre-emption terminal 200B. The designation identification information may be designated as information indicating a part or all of a terminal ID for identifying the terminal device 200.

Furthermore, the pre-emption designation information may include information for allocating the permission terminal 200B to the latest single radio resource. Furthermore, in a case where the pre-empted terminal 200A schedules a plurality of resources such as repeated transmission and retransmission, the pre-emption designation information may include information indicating which resource is allocated to each of the first and second pre-emption terminals 200B1 and 200B2. In this case, the pre-empted terminal 200A can permit each of the plurality of pre-emption terminals 200B to perform pre-emption.

Furthermore, the pre-empted terminal 200A can transmit the re-execution request information to the pre-emption terminal 200B that has not been permitted to perform pre-emption (hereinafter, the terminal is also referred to as a non-permission terminal 200B), that is, the pre-emption terminal 200B that has not been able to perform pre-emption. The re-execution request information may include at least one of request information for requesting the non-permission terminal 200B to perform the pre-emption operation again and permission information for permitting an increase in the priority of the pre-emption. The re-execution request information may be transmitted being included in the pre-emption designation information, or may be transmitted to the non-permission terminal 200B separately from the pre-emption designation information. When the non-permission terminal 200B transmits pre-emption information in order to perform pre-emption next time, the pre-emption information can include information indicating that pre-emption has not been permitted in the previous time.

Furthermore, the pre-empted terminal 200A can transmit pre-empted request information requesting a terminal device 200 other than the pre-emption terminal 200B to become a pre-empted terminal. The pre-empted request information may be transmitted being included in the pre-emption designation information, or may be transmitted separately from the pre-emption designation information.

The terminal device 200 that has received the pre-empted request information and has determined (approved) to become a pre-empted terminal according to the pre-empted request information can transmit response information to the pre-empted request information. For example, the terminal device 200 transmits, to the non-permission terminal 200B, information indicating that pre-emption for the radio resource scheduled by the terminal device 200 itself is permitted as the response information.

As described above, according to the third monitoring method, even when there are a plurality of pre-emption terminals 200B, the pre-emption terminal 200B can perform the pre-emption operation, and the packet delay can be further reduced.

### <3.4. Mode Switching Process>

In each of the monitoring methods described above, the pre-emption information is monitored by the pre-empted terminal 200A at the predetermined timing T, but the monitoring method is not limited thereto. The communication system 1 may switch whether to execute pre-emption processing according to the monitoring method. That is, the communication system 1 can switch between the first mode in which the pre-emption processing is performed by the monitoring method described above and the second mode in which the pre-emption processing is not performed. Note that, in the second mode, conventional pre-emption (see FIG. 10) may be performed, or the pre-emption (both the pre-emption according to embodiments of the present disclosure and the conventional pre-emption) does not need to be performed.

The communication system 1 can switch between the first and second modes depending on whether or not the communication system 1 exists in the surroundings of the pre-empted terminal 200A in the pre-emption terminal 200B.

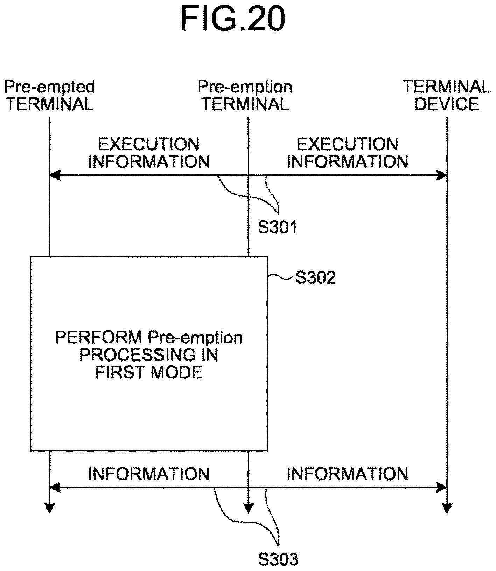

FIG. 20 is a sequence diagram illustrating an example of a procedure of mode switching processing according to an embodiment of the present disclosure.

The pre-emption terminal 200B transmits execution information of the first mode to the pre-empted terminal 200A and the another terminal device 200 (Step S301). Here, the other terminal device 200 is a terminal device 200 other than the pre-empted terminal 200A and the pre-emption terminal 200B.

The pre-emption terminal 200B that has transmitted the execution information and the pre-empted terminal 200A that has received the execution information perform pre-emption processing in the first mode (Step S302). For example, in a case where there is no free resource at the time when the URLLC packet occurs, the pre-emption terminal 200B executes the pre-emption operation. For example, the pre-empted terminal 200A executes pre-empted processing.

Further, when switching from the first mode to the second mode, the pre-emption terminal 200B transmits termination information of the first mode to the pre-empted terminal 200A and the another terminal device 200 (Step S303). As a result, the pre-empted terminal 200A shifts to the second mode and terminates the pre-empted processing. For example, the pre-empted terminal 200A stops monitoring the pre-emption information in a case where the eMBB packet is transmitted.

The execution information may include at least one of pre-emption execution information indicating performing of pre-emption, signal information related to a signal scheduled to be transmitted in the pre-emption, and processing delay information related to a transmission processing delay.

Here, the pre-emption execution information is information indicating that the pre-emption terminal 200B transitions to a state of performing pre-emption. The pre-emption execution information may be represented as a one-bit flag. Alternatively, the execution information may be represented as an element of an index group defining a plurality of states.

The signal information includes information related to at least one of a requested delay amount, a data size, the number of OFDM symbols used at the time of transmission, and the coding rate and the modulation multi-level number scheduled to be transmitted of the signal transmitted by using pre-emption.

The processing delay information is information on the time required for the pre-emption terminal 200B to perform transmission processing. The processing delay information may be defined by a specific time length or may be defined by the number of OFDM symbols.

The pre-emption terminal 200B transmits the execution information, for example, at least one of timings of at regular intervals, at startup, and in a case where a signal requiring a low delay has occurred (alternatively, in a case where a signal requiring a low delay can be generated).

Here, although it is described that the execution information and the termination information of the first mode are different from each other, the present invention is not limited thereto. The execution information and the termination information may be the same information. That is, the pre-emption terminal 200B may transmit the execution information of the first mode as the termination information of the first mode. In this case, the shift from the first mode to the second mode is notified by the pre-emption terminal 200B by using, for example, pre-emption execution information included in the execution information.

As described above, in a case where there is a possibility that the pre-emption terminal 200B performs the pre-emption operation, the execution information is notified to shift to the first mode. As a result, the pre-empted terminal 200A can perform the pre-empted processing in a case where there is the pre-emption terminal 200B in the surroundings, and can prevent the pre-empted processing from being performed in a case where there is not the pre-emption terminal 200B in the surroundings. Therefore, the pre-empted terminal 200A can omit unnecessary monitoring of the pre-emption information, and the communication system 1 can further reduce a decrease in the utilization efficiency of the radio resource.

### <3.5. Coexistence with Legacy Terminal>

Here, a case where a legacy terminal (hereinafter, also referred to as legacy terminal 200E) exists in the communication system 1 according to the embodiment of the present disclosure will be described. The Legacy terminal 200E refers to terminal device 200 that cannot perform the pre-emption operation according to the embodiment of the present disclosure (alternatively, pre-empted processing). That is, the legacy terminal 200E corresponds to the above-described conventional pre-emption operation (hereinafter, also referred to as a first pre-emption operation), but does not correspond to the pre-emption operation according to the embodiment of the present disclosure (hereinafter, also referred to as a second pre-emption operation). More specifically, when transmitting the eMBB packet, the legacy terminal 200E does not monitor the pre-emption information at the predetermined timing T.

In this manner, it is assumed that the pre-empted terminal 200A, the pre-emption terminal 200B, and the legacy terminal 200E described above exist in the communication system 1. At this time, if the legacy terminal 200E performs scheduling (reservation) for all the subchannels in a certain slot, there arises a problem that the pre-emption terminal 200B cannot perform the pre-emption operation.

For example, when a plurality of legacy terminals 200E occupy all subchannels of a certain slot, the pre-emption terminal 200B cannot be able to perform the pre-emption operation for the slot in some cases. This is because the legacy terminal 200E does not (cannot) monitor the pre-emption information when transmitting a packet in the slot.

Therefore, in the embodiment of the present disclosure, in an occurrence of a slot in which all the subchannels are scheduled by the plurality of legacy terminals 200E, the pre-empted terminal 200A performs the first pre-emption operation on at least one subchannel of the slot.

The pre-empted terminal 200A that performs the first pre-emption operation may be a pre-empted terminal 200A set in advance or a pre-empted terminal 200A specified by the base station 100. Alternatively, the base station 100 may set (schedule) one or more pre-empted terminals 200A that perform the first pre-emption operation in advance for each slot.

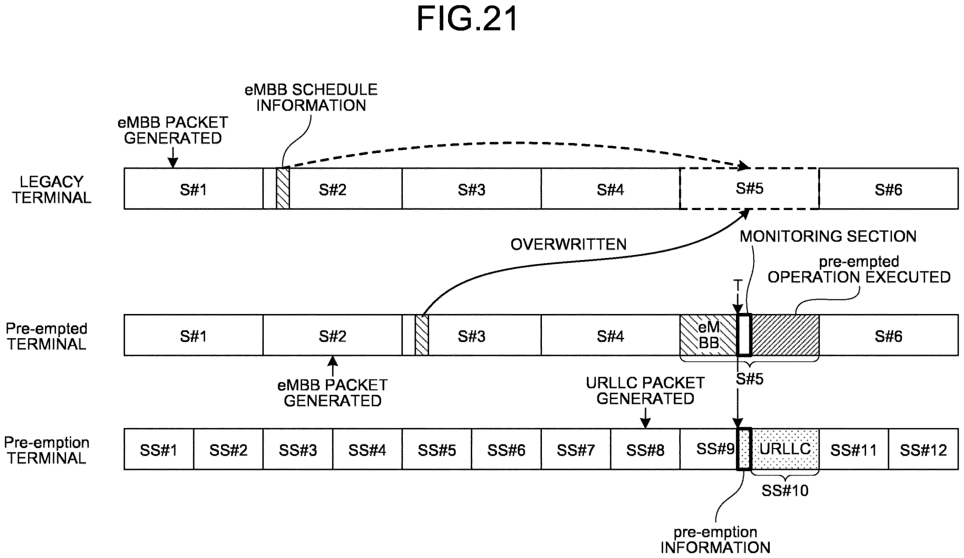

FIG. 21 is a diagram for explaining the pre-emption operation in a case where the legacy terminal 200E exists according to an embodiment of the present disclosure.

As illustrated in FIG. 21, it is assumed that the legacy terminal 200E schedules the slot S#5 by transmitting the eMBB schedule information in the slot S#2. In addition, it is assumed that all subchannels of the slot S#5 are thereby scheduled by the plurality of legacy terminals 200E (not illustrated).

When detecting that all the subchannels of the slot S#5 are scheduled by the plurality of legacy terminals 200E, the pre-empted terminal 200A performs the first pre-emption operation on at least one subchannel of the slot S#5. The pre-empted terminal 200A detects the slot S#5 in which all subchannels are scheduled by the plurality of legacy terminals 200E on the basis of the eMBB schedule information transmitted from the plurality of legacy terminals 200E, for example.

In the example of FIG. 21, the pre-empted terminal 200A transmits eMBB schedule information for transmitting an eMBB packet in the slot S#5 on the PSCCH of the slot S#3 which is the most recent slot of the slot S#2 in which the eMBB packet is generated.

The legacy terminal 200E that has received the eMBB schedule information stops (suspends) the sidelink transmission in the radio resource (slot S#5) in which the eMBB packet is scheduled to be transmitted. As a result, the schedule of the slot S#5 is overwritten by the pre-empted terminal 200A.

The pre-empted terminal 200A that has performed the first pre-emption operation waits until the slot S#5 and transmits an eMBB packet.

Here, as illustrated in FIG. 21, it is assumed that a URLLC packet is generated in the pre-emption terminal 200B in the sub-slot SS#8. In this case, the pre-emption terminal 200B performs the second pre-emption operation on the pre-empted terminal 200A. The second pre-emption operation is the same as the pre-emption operation performed by the pre-emption terminal 200B in the first monitoring method.

As described above, in the embodiment of the present disclosure, in a case where the legacy terminal 200E exists, and in a case where all the subchannels in the slot are scheduled by the legacy terminal 200E, the pre-empted terminal 200A performs the first pre-emption operation. As a result, even in a case where the legacy terminal 200E exists, the pre-emption terminal 200B can perform the pre-emption operation, and the packet delay can be further reduced.

### <3.6. Pre-emption Operation Independent of Sub-slot>

In each of the monitoring methods described above, the pre-emption terminal 200B performs pre-emption in sub-slot units, but the present invention is not limited thereto. The pre-emption terminal 200B may set at least some radio resources of the slot as pre-emption targets, and may perform pre-emption on radio resources over a plurality of sub-slots, for example.

Note that, here, it is assumed that the pre-empted terminal 200A monitors the pre-emption information by a method similar to the first monitoring method, but the pre-empted terminal 200A may monitor the pre-emption information by the second and third monitoring methods.

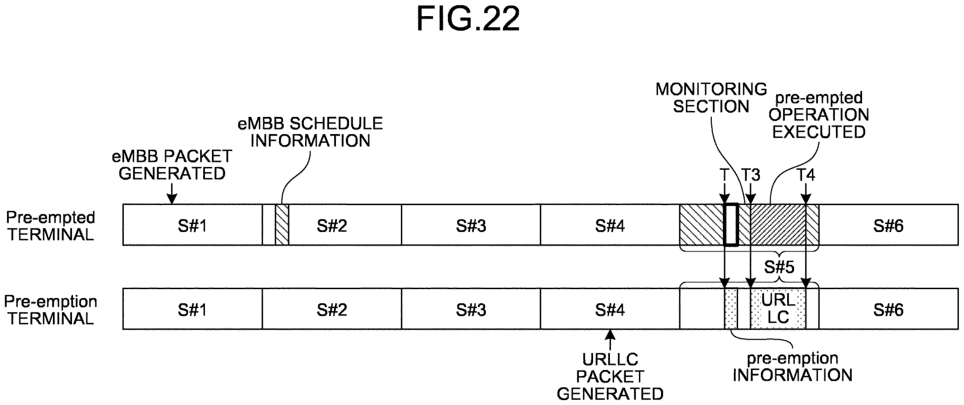

FIG. 22 is a diagram for explaining an example of the pre-emption operation according to an embodiment of the present disclosure. Note that, in FIG. 22, the pre-empted terminal 200A and the pre-emption terminal 200B transmit packets using slots.

As illustrated in FIG. 22, the pre-empted terminal 200A schedules radio resources so as to transmit, in the slot S#5, an eMBB packet generated in the slot S#1. In this case, the pre-empted terminal 200A transmits the eMBB schedule information in the PSCCH of the slot S#2 which is the most recent slot of the slot S#1 in which the eMBB packet has occurred. Thereafter, the pre-empted terminal 200A stands by for transmission of the eMBB packet until the slot S#5.

Here, as illustrated in FIG. 22, it is assumed that a URLLC packet is generated in the slot S#4 in the pre-emption terminal 200B. In this case, the pre-emption terminal 200B transmits pre-emption information to the pre-empted terminal 200A at a predetermined timing T. In the example of FIG. 22, the predetermined timing T is a predetermined symbol of the slot S#5.

Further, the pre-emption information transmitted by the pre-emption terminal 200B includes allocation information for allocating a part of radio resources to the pre-emption terminal 200B as information of radio resources to be pre-empted.

The allocation information includes, among the OFDM symbols in the slot, for example, at least one of information indicating a symbol to be used for pre-emption transmission and information related to a specific time length in which packet transmission by pre-emption is performed.

The pre-empted terminal 200A stops the transmission of the eMBB packet at a predetermined timing T, and monitors the pre-emption information in the monitoring section. The pre-empted terminal 200A that has received the pre-emption information performs a pre-empted operation in a radio resource in which packet transmission by pre-emption is performed on the basis of allocation information included in the pre-emption information. In the example of FIG. 22, the pre-empted terminal 200A performs the pre-empted operation between the third timing T3 and the fourth timing T4, and stops the transmission of the eMBB packet.

Furthermore, in the example of FIG. 22, the pre-empted terminal 200A transmits an eMBB packet in a section excluding a monitoring section and a section in which a pre-empted operation is performed in the slot S#5 in which transmission of the eMBB packet is scheduled. That is, the pre-empted terminal 200A transmits the eMBB packet in a section in which the pre-emption terminal 200B does not perform transmission in the slot S#5. As a result, the pre-empted terminal 200A can further suppress a decrease in utilization efficiency of frequency.

Alternatively, the pre-empted terminal 200A may transmit re-scheduling information for re-scheduling radio resources (for example, OFDM symbols) which are not targeted for pre-emption by the pre-emption terminal 200B in the slot S#5. The re-scheduling information can be transmitted, for example, in a section in which the pre-empted operation is not performed. As a result, the pre-empted terminal 200A can transmit the remaining eMBB packet by using the radio resource on which the pre-emption terminal 200B did not perform pre-emption. Alternatively, the radio resource can be pre-empted by another pre-emption terminal 200B.

Note that, here, one pre-emption terminal 200B performs pre-emption of the slot S#5, but the present invention is not limited thereto. A plurality of pre-emption terminals 200B may perform pre-emption of the slot S#5.

For example, the plurality of pre-emption terminals 200B designate different radio resources as radio resources to be pre-empted. In this case, the pre-empted terminal 200A transmits, for example, information permitting pre-emption for a predetermined radio resource of the slot S#5 to the plurality of pre-emption terminals 200B that have transmitted the pre-emption information.

As a result, the plurality of pre-emption terminals 200B can perform pre-emption in one slot S#5.

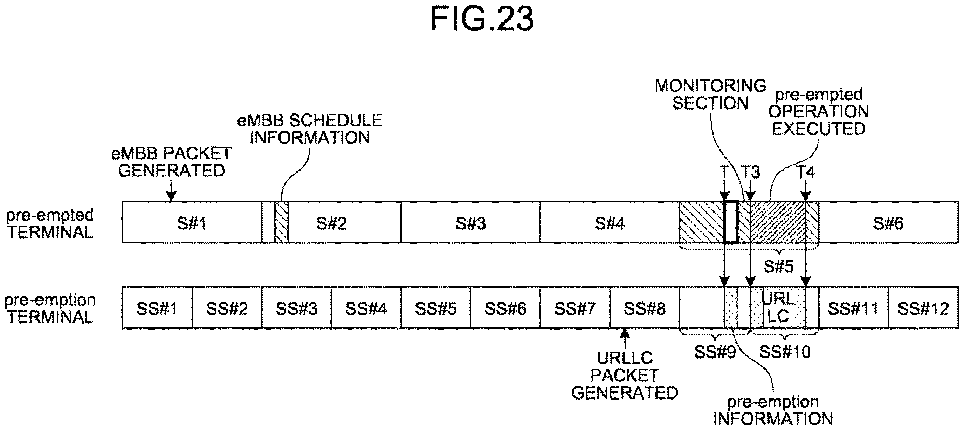

Next, FIG. 23 is a diagram for explaining another example of a pre-emption operation according to an embodiment of the present disclosure. In FIG. 23, the pre-empted terminal 200A uses a slot, and the pre-emption terminal 200B uses a sub-slot having a slot length shorter than that of the slot.

Here, as illustrated in FIG. 23, it is assumed that a URLLC packet is generated in the sub-slot SS#8 in the pre-emption terminal 200B. In this case, the pre-emption terminal 200B transmits pre-emption information to the pre-empted terminal 200A at a predetermined timing T.

In the example of FIG. 23, the predetermined timing T is a predetermined symbol of the sub-slot SS#9. In this manner, the predetermined timing T is not limited to the end of the sub-slot (the symbol at the end).

Further, the pre-emption information includes the above-described allocation information. In the example of FIG. 23, the allocation information is information for allocating a resource between the third timing T3 and the fourth timing T4. As illustrated in FIG. 23, the third timing T3 is included in the sub-slot SS#9. The fourth timing T4 is included in the sub-slot SS#10. In this manner, the pre-emption terminal 200B can designate radio resources across a plurality of sub-slots as pre-emption targets.

As a result, the pre-emption terminal 200B can more flexibly perform the pre-emption in accordance with the processing delay amount and the data amount of the URLLC packet to be transmitted.

Note that the operation of the pre-empted terminal 200A that has received the pre-emption information is the same as that in FIG. 22, and thus description thereof is omitted.

As described above, the pre-emption terminal 200B according to the embodiment of the present disclosure can set at least a part of the slots as pre-emption targets, and can improve utilization efficiency of radio resources.

### <3.7. Example of Information>

Here, an example of information exchanged in the communication system 1 according to the embodiment of the present disclosure described above will be described.

### (Pre-emption Information)

The pre-emption information transmitted by the pre-emption terminal 200B may include at least one of the following information:
- Transmission information indicating to be a signal for transmitting information regarding pre-emption
- Terminal identification information for identifying the pre-emption terminal 200B that transmits pre-emption information
- Resource information related to radio resources to be pre-empted
- Information related to processing time based on capability information of the processing time

The transmission information is, for example, information for distinguishing whether information indicating conventional ACK information is transmitted or pre-emption information is transmitted in a case where the pre-emption information is arranged at a position similar to the PSFCH. The transmission information is one-bit flag information.

Alternatively, the transmission information is information indicated by the size of the information region of the pre-emption information. That is, the pre-empted terminal 200A distinguishes whether the information to be transmitted is ACK information or pre-emption information by a difference in the size of the information region of the pre-emption information.

The resource information may include at least one of the following information:
- Information regarding the subchannel to be pre-empted
- Information regarding the number of subchannels to be pre-empted
- Information regarding the sub-slot to be pre-empted
- Information regarding the number of sub-slots to be pre-empted
- Information indicating whether or not to divert the repeated transmission portion scheduled by the pre-empted terminal 200A for performing pre-emption
- Information regarding radio resources to be used for new repeated transmission
- Allocation information for allocating a part of radio resources to the pre-emption terminal 200B

By using the information related to the processing time based on the capability information of the processing time, the pre-empted terminal 200A estimates which radio resources can be pre-empted by the pre-emption terminal 200B. That is, in a case where a plurality of radio resources is scheduled on the basis of the information, the pre-empted terminal 200A determines which radio resource the pre-emption terminal 200B can use to execute pre-emption to transmit a URLLC packet.

### (Pre-emption Designation Information)

As described above, the pre-empted terminal 200A that has received the pre-emption information from each of the plurality of pre-emption terminals 200B determines the pre-emption terminal 200B that is permitted to perform pre-emption. The pre-empted terminal 200A notifies the pre-emption terminal 200B of the determination result as pre-emption designation information.

The pre-emption designation information may include at least one of the following information:
- Terminal identification information for identifying the pre-empted terminal 200A that transmits pre-emption designation information
- Information for designating the pre-emption terminal 200B that is permitted to perform pre-emption
- Information addressed to the pre-emption terminal 200B that is not permitted to perform pre-emption
- Pre-empted request information for another terminal device 200
- Information permitting the pre-emption terminal 200B pre-emption to the selected resource of its own

Information for designating the pre-emption terminal 200B that is permitted to perform pre-emption may include at least one of the following information:
- Information for allocating the pre-emption terminal 200B to the most recent radio resources
- Information for allocating a part of radio resources and the pre-emption terminal 200B
- Information on radio resources to be allocated to each of the plurality of pre-emption terminals 200B in a case where repeated transmission or a plurality of radio resources is scheduled

Information addressed to the pre-emption terminal 200B that is not permitted to perform pre-emption may include at least one of the following information:
- Information requesting for performing re-pre-emption operation again
- Information permitting an increase in the priority of pre-emption

The pre-empted request information is, for example, information requesting the terminal device 200 that is not the pre-empted terminal 200A to become the pre-empted terminal 200A.

### (Re-scheduling Information)

The pre-empted terminal 200A reselects a radio resource as a pre-empted operation, and schedules the reselected radio resource by using schedule information (re-scheduling information).

The re-scheduling information transmitted by the pre-empted terminal 200A may include at least one of the following information:
- Information indicating being operated as the pre-empted terminal 200A within a certain period of time
- Information re-scheduling remaining radio resources that have not been pre-empted in a case where a part of radio resources have been pre-empted

### (Execution Information)

As described above, the pre-emption terminal 200B transmits execution information to switch between the first and second modes. This execution information may include at least one of the following information:
- Information indicating that the pre-emption terminal 200B transitions to a state of performing pre-emption
- Signal information related to a signal scheduled to be transmitted using pre-emption
- Processing delay information related to transmission processing delay

### <3.8. Configuration Example of Sub-slot>

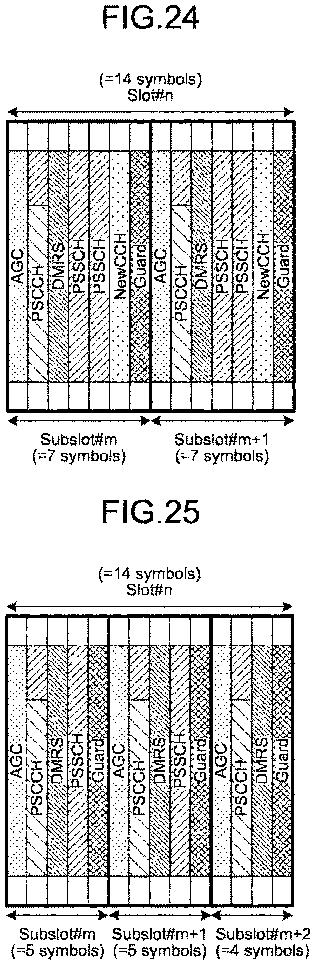

FIG. 24 is a diagram for explaining a configuration example of a sub-slot according to an embodiment of the present disclosure. The sub-slot illustrated in FIG. 24 is used, for example, to transmit pre-emption information.

As illustrated in FIG. 24, a slot#n includes 14 symbols, and sub-slots #m and #m + 1 include seven symbols for each. The pre-emption information is transmitted at a predetermined timing T of the sub-slot. In FIG. 24, the pre-emption information can be stored, for example, in the NewCCH of the last symbol among the symbols in which data can be stored in the sub-slot.

That is, in the example of FIG. 24, the predetermined timing T is a timing at which NewCCH of the sub-slot is arranged. Note that the arrangement of NewCCH is not limited to the example of FIG. 24. The NewCCH in which the pre-emption information is stored may be arranged in any symbol of the sub-slot.

FIG. 24 illustrates a case where pre-emption information is transmitted in a sub-slot, but the present invention is not limited thereto. For example, when the pre-emption terminal 200B transmits pre-emption information by using a slot, a NewCCH in which the pre-emption information is stored may be arranged in the 14th symbol. Alternatively, the NewCCH in which the pre-emption information is stored may be arranged in any symbol of the slot.

In this manner, by enabling NewCCH to be arranged in an arbitrary symbol of the slot or the sub-slot, the pre-emption terminal 200B can arrange NewCCH in the second half of the slot or the sub-slot. As a result, for example, even if a URLLC packet is generated in the first half of the slot or the sub-slot, the pre-emption terminal 200B can transmit the pre-emption information in the second half of the slot or the sub-slot. In this way, since the pre-emption information can be transmitted at an arbitrary timing, the pre-emption terminal 200B can transmit the pre-emption information at a faster timing, and a data delay can be further reduced.

### <<4. Other Embodiments>>

The above-described embodiments are examples, and various modifications and applications are possible.

For example, in the above-described embodiment, the sub-slot includes seven symbols, but the present invention is not limited thereto. The sub-slot may be configured by an arbitrary number of symbols.

FIG. 25 is a diagram illustrating another example of the configuration of the sub-slot according to an embodiment of the present disclosure.

In FIG. 25, a slot #n including 14 symbols includes three sub-slots #m, #m + 1, and #m + 2. The sub-slots #m and #m + 1 include five symbols. The sub-slot #m + 2 includes four symbols. As described above, a plurality of sub-slots having different sizes (the number of symbols) can be arranged in one slot.

Further, in FIG. 25, the numbers of symbols of the sub-slots #m, #m + 1, and #m + 2 are five, five, and four, respectively, but the present invention is not limited thereto. The number of symbols of the sub-slot may be three or less or six or more. Furthermore, for example, the number of symbols of the sub-slot can be a predetermined number less than 14.

In addition, the number of sub-slots included in one slot is not limited to three. The number of sub-slots included in one slot may be two or less, or may be four or more.

In addition, it is not necessary that all the symbols included in the slot are allocated as symbols of the sub-slot. For example, one slot may include a sub-slot including seven symbols and a sub-slot including six symbols. In this case, one symbol (for example, a symbol between each sub-slot) of the 14 symbols included in one slot may be a symbol not included (not allocated) in the sub-slot.

Furthermore, for example, the control device that controls the base station 100 and the terminal device 200 of the embodiments above may be realized by a dedicated computer system or may be realized by a general-purpose computer system.

For example, a communication program for executing the above-described operations is distributed being stored in a computer-readable recording medium such as an optical disk, a semiconductor memory, a magnetic tape, or a flexible disk. Then, for example, the program is installed in a computer, and the above-described processing is executed to configure the control device. At this time, the control device may be an external device of a transmission device and a reception device (for example, a personal computer). Furthermore, the control device may be a device inside the transmission device or the reception device (for example, the control units 150 and 240).

Further, the above-mentioned communication program may be stored in a disk device provided in a server device on a network such as the Internet in such a way to be downloaded to a computer. Further, the above-mentioned functions may be implemented by cooperation between an operating system (OS) and application software. In this case, other parts than OS may be stored in a medium for delivery, or other parts than OS may be stored in the server device and downloaded to a computer.

Among the processing described in the embodiments, all or a part of the processing, described as automatic processing, can be performed manually, or all or a part of the processing, described as manual processing, can be performed automatically by a known method. In addition, the processing procedures, specific names, and information including various data and parameters indicated in the document and the drawings can be arbitrarily changed unless otherwise specified. For example, various types of information illustrated in the drawings are not limited to the illustrated information.

Furthermore, the constituent elements of the individual devices illustrated in the drawings are functionally conceptual and are not necessarily configured physically as illustrated in the drawings. To be specific, the specific form of distribution and integration of the devices is not limited to the one illustrated in the drawings, and all or a part thereof can be configured by functionally or physically distributing and integrating in arbitrary units according to various loads, usage conditions, and the like. Note that this configuration by distribution and integration may be performed dynamically.

Furthermore, the embodiments described above can be appropriately combined to the extent that the processing contents do not contradict each other. Furthermore, the order of each step illustrated in the flowcharts and the sequence diagrams of the above-described embodiment can be changed as appropriate.

Furthermore, for example, the present embodiment can be implemented as any configuration constituting an apparatus or a system, for example, a processor as a system large scale integration (LSI) or the like, a module using a plurality of processors or the like, a unit using a plurality of modules or the like, a set further added other functions to a unit, or the like (that is, a configuration of a part of the device).

Note that, in the present embodiment, the system indicates a set of a plurality of components (devices, modules (parts), etc.), and it does not matter whether or not all the components are in the same housing. Therefore, a plurality of devices housed in separate housings and connected via a network and one device in which a plurality of modules is housed in one housing are both systems.

Furthermore, for example, the present embodiment can adopt a configuration of cloud computing in which one function is shared and processed by a plurality of devices in cooperation via a network.

### <<5. Conclusion>>

Although the embodiments of the present disclosure have been described above, the technical scope of the present disclosure is not limited to the embodiments described above as it is, and various modifications can be made without departing from the gist of the present disclosure. In addition, constituent elements of different embodiments and modifications may be appropriately combined.

Furthermore, the effects of the embodiments described in the present specification are merely examples and are not limited, and other effects may be provided.

Note that the present technology can also have the following configurations.
(1) A communication method comprising:
   performing sidelink communication with a first communication device;
   monitoring, when data is being transmitted to the first communication device, whether pre-emption information regarding pre-emption has been transmitted from a second communication device at a predetermined timing; and
   stopping transmission of the data to the first communication device when the pre-emption information has been received.
(2) The communication method according to (1), further comprising the step of continuing and/or resuming transmission of the data to the first communication device when the pre-emption information has not been received.
(3) The communication method according to (1) or (2), further comprising the step of receiving the pre-emption information from the second communication device at the predetermined timing while transmitting the data to the first communication device.
(4) The communication method according to (1) or (2), further comprising the step of stopping transmission of the data to the first communication device and receiving the pre-emption information from the second communication device at the predetermined timing.
(5) The communication method according to any one of (1) to (4), wherein the predetermined timing is a timing included in a second time unit shorter than a first time unit for transmitting the data to the first communication device.
(6) The communication method according to (5), wherein the predetermined timing is a last area in a data storable area in the second time unit.
(7) The communication method according to (5) or (6), wherein the second communication device performs sidelink communication in accordance with the second time unit.
(8) The communication method according to any one of (1) to (7), further comprising the step of reselecting a transmission resource to be used for transmission of the data when the pre-emption information is received.
(9) The communication method according to (8), wherein schedule information transmitted to reselect the transmission resource includes pre-empted information indicating being pre-empted.
(10) The communication method according to (8) or (9), further comprising the step of reselecting a radio resource different from a radio resource used for transmission of the data as the transmission resource.
(11) The communication method according to any one of (1) to (10), further comprising:
   receiving the pre-emption information from a plurality of the second communication devices;
   determining the second communication device that is permitted to perform the pre-emption among the plurality of the second communication devices; and
   transmitting permission information regarding permission of the pre-emption to the second communication device that is determined.
(12) The communication method according to (11), wherein the pre-emption information transmitted by a plurality of the second communication devices is orthogonal in at least one of a time direction and a frequency direction.
(13) The communication method according to (11) or (12), wherein the pre-emption information to be transmitted next by the second communication device that has not been permitted to perform the pre-emption, among the plurality of the second communication devices, includes information indicating that the previous pre-emption was not permitted.
(14) The communication method according to any one of (1) to (13), further comprising the step of starting monitoring of the pre-emption information at the predetermined timing in response to receiving execution information indicating execution of the pre-emption from the second communication device.
(15) The communication method according to any one of (1) to (14), further comprising
   if at least one third communication device that does not monitor the pre-emption information at the predetermined timing uses all sub-channels of a predetermined slot of a resource pool, performing a second pre-emption on the third communication device,
   wherein the second pre-emption is pre-emption that is performed on a pre-scheduled resource at a timing before the resource is used.
(16) The communication method according to any one of (1) to (15), wherein the pre-emption information includes at least one of information indicating to be information regarding the pre-emption, information regarding a radio resource targeted for the pre-emption, and information regarding a processing time.
(17) A communication method comprising:
   transmitting, at a predetermined timing, pre-emption information to a second communication device that performs sidelink communication with a first communication device and is transmitting data to the first communication device, the pre-emption information for performing pre-emption on a radio resource used by the second communication device to transmit the data; and
   performing the sidelink communication by using the radio resource.
(18) A communication device comprising:
   a communication unit that performs sidelink communication with a first communication device; and
   a control unit that monitors, when transmitting data to the first communication device, whether pre-emption information regarding pre-emption has been transmitted from a second communication device at a predetermined timing, and
   stops transmission of the data to the first communication device when received the pre-emption information.
(19) A communication device comprising
   a control unit that transmits, at a predetermined timing, pre-emption information to a second communication device that performs sidelink communication with a first communication device and is transmitting data to the first communication device, the pre-emption information for performing pre-emption on a radio resource used by the second communication device to transmit the data, and
   performs the sidelink communication by using the radio resource.
(20) A communication system comprising:
   a pre-empted device that performs sidelink communication with a first communication device and is pre-empted by a pre-emption device; and
   a pre-emption device that performs pre-emption on resources to be used by the pre-empted device,
   wherein the pre-empted device monitors whether pre-emption information regarding the pre-emption has been transmitted from the pre-emption device at a predetermined timing when transmitting data to the first communication device, and
   the pre-emption device transmits the pre-emption information at the predetermined timing to the pre-empted device transmitting the data when performing pre-emption on the resources to be used by the pre-empted device.
(21) A communication method comprising:
   performing sidelink communication with a first communication device;
   monitoring, when data is being transmitted to the first communication device, whether pre-emption information regarding pre-emption has been transmitted from a second communication device at a predetermined timing; and
   receiving the pre-emption information from the second communication device while transmitting the data to the first communication device at the predetermined timing.
(22) A communication device comprising:
   a communication unit that performs sidelink communication with a first communication device; and
   a control unit that monitors, when data is being transmitted to the first communication device, whether pre-emption information regarding pre-emption has been transmitted from a second communication device at a predetermined timing,
   wherein the communication unit receives the pre-emption information from the second communication device while transmitting the data to the first communication device at the predetermined timing.

### Reference Signs List

1 COMMUNICATION SYSTEM
100 BASE STATION
110, 210 ANTENNA UNIT
120, 220 RADIO COMMUNICATION UNIT
130 NETWORK COMMUNICATION UNIT
140, 230 STORAGE UNIT
150, 240 CONTROL UNIT
200 TERMINAL DEVICE

## Claims

1. A communication method comprising:
performing sidelink communication with a first communication device;
monitoring, when data is being transmitted to the first communication device, whether pre-emption information regarding pre-emption has been transmitted from a second communication device at a predetermined timing; and
stopping transmission of the data to the first communication device when the pre-emption information has been received.

2. The communication method according to claim 1, further comprising the step of continuing and/or resuming transmission of the data to the first communication device when the pre-emption information has not been received.

3. The communication method according to claim 1, further comprising the step of receiving the pre-emption information from the second communication device at the predetermined timing while transmitting the data to the first communication device.

4. The communication method according to claim 1, further comprising the step of stopping transmission of the data to the first communication device and receiving the pre-emption information from the second communication device at the predetermined timing.

5. The communication method according to claim 1, wherein the predetermined timing is a timing included in a second time unit shorter than a first time unit for transmitting the data to the first communication device.

6. The communication method according to claim 5, wherein the predetermined timing is a last area in a data storable area in the second time unit.

7. The communication method according to claim 5, wherein the second communication device performs sidelink communication in accordance with the second time unit.

8. The communication method according to claim 1, further comprising the step of reselecting a transmission resource to be used for transmission of the data when the pre-emption information is received.

9. The communication method according to claim 8, wherein schedule information transmitted to reselect the transmission resource includes pre-empted information indicating being pre-empted.

10. The communication method according to claim 8, further comprising the step of reselecting a radio resource different from a radio resource used for transmission of the data as the transmission resource.

11. The communication method according to claim 1, further comprising:
receiving the pre-emption information from a plurality of the second communication devices;
determining the second communication device that is permitted to perform the pre-emption among the plurality of the second communication devices; and
transmitting permission information regarding permission of the pre-emption to the second communication device that is determined.

12. The communication method according to claim 11, wherein the pre-emption information transmitted by a plurality of the second communication devices is orthogonal in at least one of a time direction and a frequency direction.

13. The communication method according to claim 11, wherein the pre-emption information to be transmitted next by the second communication device that has not been permitted to perform the pre-emption, among the plurality of the second communication devices, includes information indicating that the previous pre-emption was not permitted.

14. The communication method according to claim 1, further comprising the step of starting monitoring of the pre-emption information at the predetermined timing in response to receiving execution information indicating execution of the pre-emption from the second communication device.

15. The communication method according to claim 1, further comprising
if at least one third communication device that does not monitor the pre-emption information at the predetermined timing uses all sub-channels of a predetermined slot of a resource pool, performing a second pre-emption on the third communication device,
wherein the second pre-emption is pre-emption that is performed on a pre-scheduled resource at a timing before the resource is used.

16. The communication method according to claim 1, wherein the pre-emption information includes at least one of information indicating to be information regarding the pre-emption, information regarding a radio resource targeted for the pre-emption, and information regarding a processing time.

17. A communication method comprising:
transmitting, at a predetermined timing, pre-emption information to a second communication device that performs sidelink communication with a first communication device and is transmitting data to the first communication device, the pre-emption information for performing pre-emption on a radio resource used by the second communication device to transmit the data; and
performing the sidelink communication by using the radio resource.

18. A communication device comprising:
a communication unit that performs sidelink communication with a first communication device; and
a control unit that monitors, when transmitting data to the first communication device, whether pre-emption information regarding pre-emption has been transmitted from a second communication device at a predetermined timing, and
stops transmission of the data to the first communication device when received the pre-emption information.

19. A communication device comprising
a control unit that transmits, at a predetermined timing, pre-emption information to a second communication device that performs sidelink communication with a first communication device and is transmitting data to the first communication device, the pre-emption information for performing pre-emption on a radio resource used by the second communication device to transmit the data, and
performs the sidelink communication by using the radio resource.

20. A communication system comprising:
a pre-empted device that performs sidelink communication with a first communication device and is pre-empted by a pre-emption device; and
a pre-emption device that performs pre-emption on resources to be used by the pre-empted device,
wherein the pre-empted device monitors whether pre-emption information regarding the pre-emption has been transmitted from the pre-emption device at a predetermined timing when transmitting data to the first communication device, and
the pre-emption device transmits the pre-emption information at the predetermined timing to the pre-empted device transmitting the data when performing pre-emption on the resources to be used by the pre-empted device.

21. A communication method comprising:
performing sidelink communication with a first communication device;
monitoring, when data is being transmitted to the first communication device, whether pre-emption information regarding pre-emption has been transmitted from a second communication device at a predetermined timing; and
receiving the pre-emption information from the second communication device while transmitting the data to the first communication device at the predetermined timing.

22. A communication device comprising:
a communication unit that performs sidelink communication with a first communication device; and
a control unit that monitors, when data is being transmitted to the first communication device, whether pre-emption information regarding pre-emption has been transmitted from a second communication device at a predetermined timing,
wherein the communication unit receives the pre-emption information from the second communication device while transmitting the data to the first communication device at the predetermined timing.
